# FASCICULE DE BREVET EUROPEEN

(11) **EP 2 222 756 B1**
(45) Date de publication et mention de la délivrance du brevet: **17.10.2018**
(21) Numéro de dépôt: 08873003.1
(22) Date de dépôt: 18.12.2008
(51) Int. Cl.: C08G 77/08, C08L 83/04, C08K 5/56, C08J 3/24, C07C 49/92

(54) **COMPOSITION ORGANOPOLYSILOXANIQUE VULCANISABLE A TEMPERATURE AMBIANTE EN ELASTOMERE ET NOUVEAUX CATALYSEURS DE POLYCONDENSATION D'ORGANOPOLYSILOXANES**
BEI ZIMMERTEMPERATUR ZU EINEM ELASTOMER VULKANISIERBARE ORGANOPOLYSILOXANZUSAMMENSETZUNG SOWIE NEUARTIGE KATALYSATOREN ZUR POLYKONDENSATION VON ORGANOPOLYSILOXANEN
ROOM-TEMPERATURE VULCANISABLE ORGANOPOLYSILOXANE COMPOUND TO GIVE AN ELASTOMER AND NOVEL ORGANOPOLYSILOXANE POLYCONDENSATION CATALYSTS

(30) Priorité: 20.12.2007 FR 0708924
(43) Date de publication de la demande: 01.09.2010
(73) Titulaire: ELKEM SILICONES France SAS, 69003 Lyon (FR)
(72) Inventeur: MALIVERNEY, Christian, F-69690 Saint Julien sur Bibost (FR); SAINT JAMES, Laurent, F-69390 Vourles (FR)
(74) Mandataire: Mekki, Boualem
(86) Numéro de dépôt international: PCT/FR2008/001769
(87) Numéro de publication internationale: WO 2009/106719

(56) Documents cités:
- EP-A2- 0 147 323
- EP-A2- 0 884 351
- WO-A-2005/003223
- JP-A- 2000 066 004
- US-A- 4 404 348
- US-A- 4 677 147
- US-A- 5 994 456
- US-A1- 2002 156 210
- US-A1- 2002 156 210
- US-A1- 2007 244 249
- US-B1- 6 365 538
- "Silicones", 15 April 2003 (2003-04-15), ENCYCLOPEDIA OF POLYMER SCIENCE AND TECHNO, WILEY, US, PAGE(S) 765 - 841, XP007918236, * pages 809-811 *

## Description

La présente invention concerne une composition organopolysiloxanique vulcanisable dès la température ambiante en élastomère réticulant par polycondensation et ne contenant pas de catalyseurs à base d'alkylétain qui présentent des problèmes de toxicité.

L'invention concerne aussi de nouveaux catalyseurs de polycondensation dans la chimie des silicones et leurs utilisations comme catalyseurs de la réaction de polycondensation d'organopolysiloxanes.

Les formulations des élastomères réticulant par polycondensation font généralement intervenir une huile silicone, généralement un polydiméthylsiloxane, à terminaisons hydroxylées, éventuellement pré-fonctionnalisées par un silane de façon à présenter des extrémités alcoxy, un réticulant, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc.

Ces compositions organopolysiloxaniques vulcanisables dès la température ambiante sont bien connues et sont classées en 2 groupes distincts: les compositions monocomposantes (RTV-1) et les compositions bicomposantes (RTV-2).

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomérique.

Généralement, les compositions monocomposantes (RTV-1) réticulent quand elles sont exposées à l'humidité de l'air, c'est-à-dire qu'elles ne peuvent réticuler dans un milieu en confiné. Par exemple, les compositions silicones monocomposantes utilisées comme mastics ou adhésifs réticulent à froid suivant un mécanisme d'hydrolyse de fonctions réactives du type acétoxysilane, cétiminoxysilane, alcoxysilane..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Généralement, la cinétique des réactions de polycondensation est extrêmement lente; ces réactions sont donc catalysées par un catalyseur approprié. Comme catalyseurs qui sont utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité.

Quand aux compositions bicomposantes, elles sont commercialisées et stockées sous la forme de deux composantes, une première composante contenant les matériaux polymériques de base et la deuxième composante contenant le catalyseur. Les deux composantes sont mélangées lors de l'emploi et le mélange réticule sous la forme d'un élastomère relativement dur. Ces compositions à deux composantes sont bien connues et sont notamment décrites dans l'ouvrage de Walter Noll "Chemistry and Technology of Silicones" 1968, 2ème édition aux pages 395 à 398. Ces compositions comportent essentiellement 4 ingrédients différents:
- un polymère réactif α,ω-dihydroxydiorganopolysiloxane,
- un agent de réticulation, généralement un silicate ou un polysilicate,
- un catalyseur à l'étain, et
- de l'eau.

Le plus souvent, le catalyseur de condensation est à base d'un composé organique d'étain. En effet, de nombreux catalyseurs à base d'étain ont déjà été proposés comme catalyseur de réticulation de ces RTV-2. Les composés les plus utilisés sont les carboxylates d'alkylétain tels que le monooléate de tributyltain ou les dicarboxylates de dialkylétain tels que le dilaurate de dibutylétain, le diacétate de dibutylétain ou le dilaurate de diméthylétain (voir l'ouvrage de Noll "Chemistry and Technology of silicones" page 337, Academic Press, 1968 - 2ème édition ou les brevets EP 147 323 ou EP 235 049).

Cependant, les catalyseurs à base d'alkylétain, bien que très efficaces, le plus souvent incolores, liquides et solubles dans les huiles silicones présentent l'inconvénient d'être toxiques (CMR2 toxiques pour la reproduction).

Les catalyseurs à base de titane, également très employés dans les RTV-1, présentent cependant un inconvénient majeur: ils ont une cinétique plus lente que les catalyseurs à base d'étain. De plus, ces catalyseurs ne sont pas utilisables dans les RTV-2 du fait de problèmes de gélification.

D'autres catalyseurs sont parfois mentionnés comme les catalyseurs à base de zinc, de zirconium (cf. notamment WO 2005/003223) ou d'aluminium, mais ils n'ont connus qu'un faible développement industriel en raison de leur médiocre efficacité.

Pour un développement durable, il apparaît donc nécessaire de développer des catalyseurs non toxiques pour la réaction de polycondensation des organopolysiloxanes.

Un autre aspect important pour un catalyseur de la réaction de polycondensation des organopolysiloxanes est le temps de mise en oeuvre (« pot-life » ou « temps de travail »), c'est-à-dire le temps pendant lequel la composition peut être utilisée après mélange sans durcir. Ce temps doit être suffisamment long, pour permettre son utilisation mais suffisamment court pour obtenir un objet moulé manipulable au plus tard quelques minutes ou quelques heures après sa fabrication. Le catalyseur doit donc permettre d'obtenir un bon compromis entre le temps d'utilisation du mélange catalysé et le temps au bout duquel l'objet moulé est manipulable (ces temps dépendent de l'application visée comme par exemple le moulage ou la fabrication de joints). En outre le catalyseur doit conférer au mélange catalysé un temps d'étalement qui ne varie pas en fonction de la durée au stockage.

L'objectif essentiel de la présente invention est donc de trouver de nouveaux catalyseurs permettant aussi bien, à l'humidité de l'air, une réticulation en surface mais aussi une réticulation à coeur la plus complète possible.

Un autre objectif essentiel de la présente invention est de proposer un catalyseur utilisable à la fois dans la réticulation des compositions élastomères mono- et bi-composantes.

Un autre objectif essentiel de la présente invention est de proposer un système catalytique qui continue à répondre à la fois aux contraintes de conservation, de mise en oeuvre et de réticulation des deux types de compositions élastomères mono- et bi-composantes.

Ces objectifs, parmi d'autres, sont atteints par la présente invention qui concerne tout d'abord une composition organopolysiloxanique, caractérisée en ce qu'elle comprend d'une part une base silicone B apte à durcir par réaction de polycondensation en un élastomère silicone et d'autre part, une quantité catalytiquement efficace d'au moins un catalyseur de polycondensation qui est un complexe ou sel métallique **A** de formule **(1), (2)** ou **(3)** suivante:

[M(L¹)ᵣ₁(L²)ᵣ₂(Y)ₓ] **(1)**

dans laquelle:
- r1 ≥ 1, r2> 0 et x≥0 ;
- le symbole M représente un métal sélectionné parmi le groupe constitué par: le cuivre, l'argent, le scandium, le cérium, l'ytterbium, le molybdène, le germanium et le manganèse;
- le symbole L¹ représente un ligand qui est un anion β-dicarbonylato ou l'anion énolate d'un composé β-dicarbonylé, ou un anion acétylacétato dérivé d'un β-cétoester et lorsque r1 ≥ 2, les symboles L¹ sont identiques ou différents, avec la condition supplémentaire que lorsque le symbole M représente le cuivre alors le symbole L' n'est pas l'acétylacétonate (acac),
- le symbole L² représente un ligand anionique qui est différent de L¹ et lorsque r2 ≥ 2, les symboles L² sont identiques ou différents, et
- le symbole Y représente un ligand neutre et lorsque x ≥ 2, les symboles Y sont identiques ou différents,

[Fe(L³)ᵣ₃(L⁴)ᵣ₄(Y')_{x'}] **(2)**

dans laquelle:
- r3 ≥ 1 ; r4 > 0 et x'≥ 0 ;
- le symbole L³ représente un ligand qui est un anion β-cétoestérato ou l'anion énolate d'un composé β-cétoester et lorsque r3 ≥ 2, les symboles L³ sont identiques ou différents;
- le symbole L⁴ représente un ligand anionique qui est différent de L³ et lorsque r4 ≥ 2, les symboles L⁴ sont identiques ou différents, et
- le symbole Y' représente un ligand neutre et lorsque x' ≥ 2, les symboles Y' sont identiques ou différents, et

[Fe(L⁵)ᵣ₅(L⁴)ᵣ₄(Y')_{x'}] (3)

dans laquelle:
- r5 ≥ 1; r4 > 0 et x'≥ 0;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque r5 ≥ 2, les symboles L⁵ sont identiques ou différents;
- le symbole L⁴ représente un ligand anionique qui est différent de L⁵ et lorsque r4 ≥ 2, les symboles L⁴ sont identiques ou différents, et
- le symbole Y' représente un ligand neutre et lorsque x' ≥ 2, les symboles Y' sont identiques ou différents, et
- L² et L⁴ sont des ligands anioniques sélectionnés dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Il est entendu que par "complexe ou sel métallique **A**", cette définition inclut toute forme oligomérique ou analogue dudit complexe ou sel métallique **A.**

Il est du mérite des inventeurs d'avoir trouvé, de manière tout à fait surprenante et inattendue, qu'il convient d'utiliser des complexes métalliques d'une sélection de certains métaux dont au moins un ligand est un anion β-dicarbonylato pour obtenir d'excellents catalyseurs de la réaction de polycondensation d'organopolysiloxanes.

Il est aussi du mérite des inventeurs d'avoir vaincu le préjugé technique qui voulait que, jusqu'alors certains complexes de métaux ne présente qu'une médiocre activité dans la réaction de polycondensation d'organopolysiloxanes.

La définition des ligands est tirée de l'ouvrage « Chimie Organométallique » de Didier Astruc, publié en 2000 par EDP Sciences, Cf. notamment Chapitre 1, « Les complexes monométalliques », pages 31 et suivantes.

La nature du ligand neutre Y ou Y' importe peu et l'homme du métier utilisera tout type de ligand neutre adapté au métal concerné.

Le catalyseur selon l'invention peut être à l'état solide ou liquide. Il peut être incorporé seul ou dans un solvant approprié. Lorsqu'il est en solvant, une huile silicone peut être additionnée, le solvant est ensuite évaporé de manière à transférer le catalyseur dans un milieu silicone. Le mélange obtenu sert de base catalysante.

Selon un mode de réalisation préféré, le catalyseur de polycondensation selon l'invention est un complexe ou sel métallique **A** qui est choisi parmi les formules **(4), (5)** et **(6)** suivantes:

[M(L¹)ₗ₁(L²)ₗ₂] **(4)**

dans laquelle:
- l₁ ≥1 et l₂ > 0;
- le symbole M représente un métal sélectionné parmi le groupe constitué par: le cuivre, l'argent, le scandium, le cérium, l'ytterbium, le molybdène, le germanium et le manganèse;
- le symbole L¹ représente un ligand qui est un anion β-dicarbonylato ou l'anion énolate d'un composé β-dicarbonylé, ou un anion acétylacétato dérivé d'un β-cétoester et lorsque l₁ ≥ 2, les symboles L¹ sont identiques ou différents, avec la condition supplémentaire que lorsque le symbole M représente le cuivre alors le symbole L¹ n'est pas l'acétylacétonate (acac),
- le symbole L² représente un ligand anionique différent de L¹ et lorsque l₂ ≥ 2, les symboles L² sont identiques ou différents,

[Fe(L³)ₗ₃(L⁴)ₗ₄] **(5)**

dans laquelle:
- l₃ ≥ 1, l₄ > 0 et l₃ +l₄=3;
- le symbole L³ représente un ligand qui un anion β-cétoesterato ou l'anion énolate d'un composé β-cétoester et lorsque l₃ ≥ 2, les symboles L³ sont identiques ou différents;
- le symbole L⁴ représente un ligand anionique différent de L³ et lorsque l₄ ≥ 2, les symboles L⁴ sont identiques ou différents, et

[Fe(L⁵)ₗ₅(L⁴)ₗ₄] **(6)**

dans laquelle:
- l₅ ≥ 1 l₄> 0 et l₄+l₅=3;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque l₅ ≥ 2, les symboles L⁵ sont identiques ou différents; et
- le symbole L⁴ représente un ligand anionique qui est différent de L⁵ et lorsque l₄ ≥ 2, les symboles L⁴ sont identiques ou différents, et
- L² et L⁴ sont des ligands anioniques sélectionnés dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Selon un autre mode de réalisation préféré, le catalyseur de polycondensation selon l'invention est un une quantité catalytiquement efficace d'au moins un catalyseur de polycondensation qui est un complexe ou sel métallique **A** de formule **(1'), (2')** ou **(3')** suivante:

[M(L¹)ᵣ₁(L²)ᵣ₂(Y)ₓ] **(1')**

dans laquelle:
- r1 ≥ 1, r2> 0 et x≥ 0 ;
- le symbole M représente un métal sélectionné parmi le groupe constitué par: le cérium, le molybdène, et le manganèse ;
- le symbole L¹ représente un ligand qui est un anion β-dicarbonylato ou l'anion énolate d'un composé β-dicarbonylé, ou un anion acétylacétato dérivé d'un β-cétoester et lorsque r1 ≥ 2, les symboles L¹ sont identiques ou différents, - le symbole L² représente un ligand anionique qui est différent de L¹ et lorsque r2 ≥ 2, les symboles L² sont identiques ou différents, et
- le symbole Y représente un ligand neutre et lorsque x ≥ 2, les symboles Y sont identiques ou différents,

[Fe(L³)ᵣ₃(L⁴)ᵣ₄(Y')_{x'}] **(2)**

dans laquelle:
- r3 ≥ 1 ; r4>0 et x'≥ 0 ;
- le symbole L³ représente un ligand qui est un anion β-cétoestérato ou l'anion énolate d'un composé β-cétoester et lorsque r3 ≥ 2, les symboles L³ sont identiques ou différents;
- le symbole L⁴ représente un ligand anionique qui est différent de L³ et lorsque r4 ≥ 2, les symboles L⁴ sont identiques ou différents, et
- le symbole Y' représente un ligand neutre et lorsque x' ≥ 2, les symboles Y' sont identiques ou différents, et

[Fe(L⁵)ᵣ₅(L⁴)ᵣ₄(Y')_{x'}] **(3)**

dans laquelle:
- r5 ≥ 1 ; r4>0 et x'≥ 0 ;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque r5 ≥ 2, les symboles L⁵ sont identiques ou différents et
- L² et L⁴ sont des ligands anioniques sélectionnés dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻, acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Dans un autre mode de réalisation, le catalyseur de polycondensation selon l'invention est un complexe ou sel métallique **A** qui est choisi parmi le groupe constitué par les complexes ou sel métallique de formules **(7), (8)** et **(11)** suivantes:

**(7):** [Ce(L¹)ᵣ₅(L²)ᵣ₆]; avec r5 ≥ 1 et r6> 0 et r5+r6=3,

**(8):** [Mo(L¹)ᵣ₇(L²)ᵣ₈]; avec r7 ≥ 1 et r8 > 0 et r7+r8=6,

**(11):** [Mn(L¹)ᵣ₁₃(L²)ᵣ₁₄]; avec r13 ≥ 1 et r14> 0 et r13+r14=3,

dans lesquelles:
- le symbole L¹ représente un ligand qui est un anion β-dicarbonylato ou l'anion énolate d'un composé β-dicarbonylé ou un anion acétylacétato dérivé d'un β-cétoester et lorsque le nombre de ligand L¹ ≥ 2, les symboles L¹ sont identiques ou différents, avec la condition supplémentaire que lorsque le symbole M représente le bismuth alors le symbole L¹ n'est pas l'acétylacétonate (acac), et
- le symbole L² représente un ligand anionique différent de L' et lorsque le nombre de ligand L² ≥ 2, les symboles L² sont identiques ou différents et
- les ligands anioniques L² sont sélectionnés dans le groupe constitué par les anions: fluoro (F⁻), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tétraoxochlorato(1⁻) (CIO₄)⁻, hydroxo (OH)⁻, mercapto (SH)⁻, sélanuro (SeH)⁻, hyperoxo (O₂)⁻, ozonido (O₃)⁻, hydroxo (OH⁻), hydrodisulfuro (HS₂)⁻, méthoxo (CH₃O)⁻, éthoxo (C₂H₅O)⁻, propoxydo (C₃H₇O)⁻, méthylthio (CH₃S)⁻, éthanethiolato (C₂H₅S)⁻, 2-chloroéthanolato (C₂H₄CIO)⁻, phénoxydo (C₆H₅O)⁻, phénylthio (C₆H₅S)⁻, 4-nitrophénolato [C₆H₄(NO₂)O]⁻, formato (HCO₂)⁻ , acétato (CH₃CO₂)⁻, propionato (CH₃CH₂CO₂)⁻, azoturo (N₃)⁻, cyano (CN)⁻, cyanato (NCO)⁻, thiocyanato (NCS)⁻, sélénocyanato (NCSe)⁻, amido (NH₂)⁻, phosphino (PH₂)⁻, chloroazanuro (ClHN)⁻, dichloroazanuro (Cl₂N)⁻, [méthanaminato(1⁻)] (CH₃NH)⁻, diazénuro (HN=N)⁻, diazanuro (H₂N-NH)⁻, diphosphénuro (HP=P)⁻, phosphonito (H₂PO)⁻, phosphinato (H₂PO₂)⁻, carboxylato, énolato, les amidures, alkylato et arylato.

Pour la réalisation de l'invention, comme catalyseur de polycondensation selon l'invention, on utilise de préférence un complexe ou sel métallique **A** choisi parmi le groupe constitué par les complexes suivants:
**(15):** [Mo(O₂)(*t-Bu-acac*)₂] avec *(t-Bu-acac)* = l'anion 2,2,6,6-tétraméthyl-3,5-heptanedionato ou l'anion énolate de la 2,2,6,6-tétraméthyl-3,5-heptanedione,
**(16):** [Mo(O₂)(*Cy-acac*)₂] avec *Cy-acac* = l'anion 2-acétylcyclohexanonato ou l'anion énolate de la 2-acétylcyclohexanone,
**(17):** [Mo(O₂)(*acac*)₂] avec *acac* = l'anion 2,4-pentanedionato ou l'anion énolate de la 2,4-pentanedione,
**(18):** [Mo (O₂)*(Cp-acac)₂*] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)],
**(33):** [Fe(isopropyle acétoacétato)(2,2-diméthylbutyrato)₂], et

Il est à noter qu'au moins une partie du caractère inventif de l'invention, tient à la sélection judicieuse et avantageuse des associations délimitées de composés métalliques **A** utilisées à titre de catalyseur de polycondensation.

Selon une disposition préférée de réalisation de l'invention, le ligand β-dicarbonylato L¹ est un anion β-dicétonato dérivé d'une β-dicétone ou un anion β-cétoesterato dérivé d'un β-cétoester de formule suivante:

R¹COCHR²COR³ **(34)**

dans laquelle :
- R¹ représente un radical hydrocarboné linéaire ou ramifié, substitué ou non, en C₁-C₃₀ ou un aromatique substitué ou non,
- R² est un hydrogène ou un radical hydrocarboné, en général alkyle, présentant avantageusement au plus 4 atomes de carbone ;
- R³ représente un radical hydrocarboné en C₁-C₃₀ linéaire, cyclique ou ramifié, substitué ou non, un aromatique substitué ou non, ou un radical -OR⁴ avec R⁴ qui représente un radical hydrocarboné en C₁-C₃₀ linéaire, cyclique ou ramifié, substitué ou non, avec
- R¹ et R² peuvent être reliés pour former un cycle, et
- R² et R⁴ peuvent être reliés pour former un cycle, et
avec la condition supplémentaire que lorsque le symbole M représente le cuivre alors le symbole L¹ n'est pas l'acétylacétonate (acac).

Parmi les β-dicétones de formule **(34)** particulièrement intéressantes pour la composition selon l'invention, on citera celles choisies parmi le groupe constitué par les β-dicétones: 2,4-pentanedione (*acac*); l'hexanedione-2,4; heptanedione-2,4; heptanedione-3,5; l'éthyl-3-pentanedione-2,4; méthyl-5-hexanedione-2,4; octanedione-2,4; octanedione-3,5; diméthyl-5,5-hexanedione-2,4; méthyl-6-heptanedione-2,4; diméthyl-2,2-nonanedione-3,5; diméthyl-2,6 heptanedione-3,5;2-acétylcyclohexanone (*Cy-acac*); 2,2,6,6-tétraméthyl-3,5-heptanedione (*t-Bu-acac*)*;* 1,1,1,5,5,5-hexafluoro-2,4-pentanedione (*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

Selon une autre disposition préférée de réalisation de l'invention, le ligand β-dicarbonylato L¹ est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique ou ceux décrit dans la demande de brevet FR-A-1435882.

Selon un mode de réalisation particulièrement préféré, L² et L⁴ sont des ligands anioniques sélectionnés dans le groupe constitué par les anions: acétate, oxalate, propionate, butyrate, isobutyrate, diéthylacétate, benzoate, 2-éthylhexanoate, stéarate, méthoxyde, éthoxyde, isopropoxyde, tert-butoxyde, tert-pentoxyde, 8-hydroxyquinolinate, naphténate, tropolonate et l'anion oxo O²⁻.

Un autre objet de l'invention consiste en l'utilisation comme catalyseur de la réaction de polycondensation d'organopolysiloxanes des complexes ou sels métalliques **A** selon l'invention tels que décrits ci-dessus.

Un autre objet de l'invention consiste en l'utilisation comme catalyseur de la réaction de polycondensation d'organopolysiloxanes des composés choisis parmi le groupe constitué par les complexe ou sel métallique de formules suivantes
(15): [Mo (O₂)(*t-Bu-acac*)*₂*] avec *(t-Bu-acac)* = l'anion 2,2,6,6-tétraméthyl-3,5-heptanedionato ou l'anion énolate de la 2,2,6,6-tétraméthyl-3,5-heptanedione,
**(16):** [Mo(O₂)(*Cy-acac*)₂] avec *Cy-acac* = l'anion 2-acétylcyclohexanonato ou l'anion énolate de la 2-acétylcyclohexanone,
**(17):** [Mo(O₂)(*acac*)₂] avec *acac* = l'anion 2,4-pentanedionato ou l'anion énolate de la 2,4-pentanedione,
**(18):** [Mo(O₂)*(Cp-aca_{C})*₂] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)],
**(33):** [Fe(isopropyle acétoacétato)(2,2-diméthylbutyrato)₂], et

Selon un autre de ses aspects, la présente invention a également pour objet les nouveaux composés de formules suivantes:
**(16):** [Mo(O₂)(*Cy-acac*)₂] avec *Cy-acac* = l'anion 2-acétylcyclohexanonato ou l'anion énolate de la 2-acétylcyclohexanone,
**(18):** [Mo(O₂)*(Cp-acac)₂*] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)], et
**(33):** [Fe(isopropyle acétoacétato)(2,2-diméthylbutyrato)₂].

La quantité du catalyseur de polycondensation selon l'invention (complexe ou sel métallique **A)** est comprise entre 0,1 et 10 % en poids de la masse totale, de préférence entre 0,5 et 5 %, que ce soit une préparation mono ou bicomposant.

### Description de la base silicone B :

Les bases silicone utilisées dans la présente invention réticulant et durcissant par des réactions de polycondensation sont bien connues. Ces bases sont décrites en détail en particulier dans de nombreux brevets et elles sont disponibles dans le commerce.

Ces bases silicones telles que revendiquées sont mono-composantes, c'est-à-dire conditionnées en un seul emballage, et stables au stockage en l'absence d'humidité, durcissables en présence d'humidité, en particulier d'humidité apportée par l'air ambiant ou par de l'eau générée au sein de la base lors de son emploi.

En dehors des bases mono-composantes revendiquées peuvent être utilisées des bases bi-composantes, c'est-à-dire conditionnées en deux emballages, qui durcissent dès l'incorporation du catalyseur de polycondensation selon l'invention. Elles sont conditionnées après incorporation du catalyseur en deux fractions séparées, l'une des fractions pouvant ne renfermer par exemple que le catalyseur selon l'invention ou un mélange avec l'agent réticulant.

La base silicone **B** utilisée pour réaliser la composition selon l'invention peut comprendre:
- au moins une huile polyorganosiloxane **C** susceptible de réticuler par polycondensation en un élastomère;
- éventuellement au moins un agent de réticulation **D;**
- éventuellement au moins un promoteur d'adhérence **E;** et
- éventuellement au moins une charge minérale siliceuse, organique et/ou non siliceuse **F.**

L'huile polyorganosiloxane **C** est de préférence un polymère α,ω-dihydroxypolydiorganosiloxane, de viscosité comprise entre 50 et 5 000 000 mPa.s à 25°C et l'agent de réticulation **D** est de préférence un composé organosilicié portant plus de deux groupes hydrolysables liés aux atomes de silicium par molécule. L'huile polyorganosiloxane **C** peut également être fonctionnalisée au niveau de ses extrémités par des radicaux hydrolysables obtenu par condensation d'un précurseur porteur de fonctions hydroxyles avec un silane réticulant porteur de radicaux hydrolysables.

Comme agent de réticulation **(D)** on peut citer :
- les silanes de formule générale suivante :

   R¹ₖSi(OR²)₍₄₋ₖ₎

   dans laquelle les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2; et
- les produits d'hydrolyse partielle de ce silane.

Comme exemple de radicaux alcoxyalkylène en C₃-C₆ on peut citer les radicaux suivants :

CH₃OCH₂CH₂-

CH₃OCH₂CH(CH₃)-

CH₃OCH(CH₃)CH₂-

C₂H₅OCH₂CH₂CH₂-

Le symbole R¹ représente un radical hydrocarboné en C₁-C₁₀ englobant:
- les radicaux alkyles en C₁-C₁₀ tels que les radicaux méthyle, éthyle, propyle, butyle, pentyle, éthyl-2 hexyle, octyle, décyle,
- les radicaux vinyle, allyle, et
- les radicaux cycloalkyles ce C₅-C₈ tels que les radicaux phényle, tolyle et xylyle.

Les agents de réticulation **D** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Parmi les agents de réticulation **D,** on préfère plus particulièrement les alkyltrialcoxysilanes, les silicates d'alkyle et les polysilicates d'alkyle, dans lesquels les radicaux organiques sont des radicaux alkylés ayant de 1 à 4 atomes de carbone.

Comme autres exemples d'agents de réticulation **D** qui peuvent être utilisés, on cite plus particulièrement les silanes suivants :
- le propyltriméthoxysilane,
- le méthyltriméthoxysilane,
- l'éthyltriméthoxysilane,
- le vinyltriéthoxysilane,
- le méthyltriéthoxysilane,
- le vinyltriéthoxysilane,
- le propyltriéthoxysilane,
- le tétraéthoxysilane,
- le tétrapropoxysilane,
- le 1,2-bis(triméthoxysilyl)éthane,
- le 1,2-bis(triéthoxysilyl)éthane, et
- le tétraisopropoxysilane,
ou encore: CH₃Si(OCH₃)₃; C₂H₅Si(OC₂H₅)₃; C₂H₅Si(OCH₃)₃ CH₂=CHSi(OCH₃)₃; CH₂=CHSi(OCH₂CH₂OCH₃)₃ C₆H₅Si(OCH₃)₃; [CH₃][OCH(CH₃)CH₂OCH₃]Si[OCH₃]₂ Si(OCH₃)₄; Si(OC₂H₅)₄; Si(OCH₂CH₂CH₃)₄; Si(OCH₂CH₂CH₂CH₃)₄ Si(OC₂H₄OCH₃)₄; CH₃Si(OC₂H₄OCH₃)₃; CICH₂Si(OC₂H₅)₃;

Comme autres exemples d'agent de réticulation **D,** on peut citer le polysilicate d'éthyle, ou le polysilicate de n-propyle.

On utilise généralement de 0,1 à 60 parties en poids d'agent de réticulation **D** pour 100 parties en poids de polyorganosiloxane C susceptible de réticuler par polycondensation en un élastomère.

Ainsi la composition selon l'invention peut comprendre au moins un promoteur d'adhérence **E** tel que par exemple les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),

   [H₂N(CH₂)₃]Si(OCH₂CH₂CH₃)₃.

   [H₂N(CH₂)₃]Si(OCH₃)₃

   [H₂N(CH₂)₃]Si(OC₂H₅)₃

   [H₂N(CH₂)₄]Si(OCH₃)₃

   [H₂NCH₂CH(CH₃)CH₂CH₂]SiCH₃(OCH₃)₂

   [H₂NCH₂]Si(OCH₃)₃

   [n-C₄H₉-HN-CH₂]Si(OCH₃)₃

   [H₂N(CH₂)₂NH(CH₂)₃]Si(OCH₃)₃

   [H₂N(CH₂)₂NH(CH₂)₃]Si(OCH2CH₂OCH₃)₃

   [CH₃NH(CH₂)₂NH(CH₂)₃]Si(OCH₃)₃

   [H(NHCH₂CH₂)₂NH(CH₂)₃]Si(OCH₃)₃ 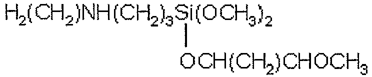 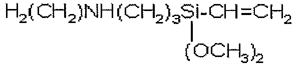
ou des oligomères polyorganosiloxaniques contenant de tels groupes organiques à une teneur supérieure à 20%.

Pour les bases mono- et bi-composantes, on utilise comme charges minérales **F** des produits très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g.

L'introduction des charges a pour but de conférer de bonnes caractéristiques mécaniques et rhéologiques aux élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

D'autres agents auxiliaires et additifs usuels peuvent être incorporés à la composition selon l'invention; ceux-ci sont choisis en fonction des applications dans lesquelles sont utilisées lesdites compositions.

La base silicone utilisée pour réaliser la composition selon l'invention peut comprendre:
- 100 parties d'huile polyorganosiloxane **C** susceptible de réticuler par polycondensation en un élastomère ;
- 0 à 20 parties d'un agent de réticulation **D;**
- 0 à 20 parties d'un promoteur d'adhérence **E;** et
- 0 à 50 parties de charge **F.**

Outre les constituants principaux, des polymères polyorganosiloxanes linéaires non réactif **(G)** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactif **(G)** sont bien connus; ils comprennent plus spécialement: des polymères α,ω-bis(triorganosiloxy)diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle et 10 % au plus étant des radicaux vinyle. La viscosité de ces polymères peut atteindre plusieurs dizaines de millions de mPa.s à 25°C; ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties, de préférence de 5 à 20 parties, pour 100 parties de d'huile polyorganosiloxane **C** susceptible de réticuler par polycondensation.

Les compositions selon l'invention peuvent en outre avantageusement comprendre au moins une résine silicone **(H).** Ces résines silicones sont des polymères organopolysiloxanes ramifiés bien connus et disponibles dans le commerce. Elles présentent, par molécule, au moins deux motifs différents choisis parmi ceux de formule R"'₃SiO_{1/2} (motif M), R'"₂SiO_{2/2} (motif D), R"'SiO_{3/2} (motif T) et SiO_{4/2} (motif Q). Les radicaux R'" sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

Pour fabriquer les compositions conformes à l'invention, il est nécessaire dans le cas des compositions mono-composantes d'utiliser un appareillage qui permette de mélanger intimement à l'abri de l'humidité, avec et sans apport de chaleur, les divers constituants fondamentaux auxquels sont éventuellement ajoutés les adjuvants et additifs précités. Tous ces ingrédients peuvent être chargés dans l'appareillage selon un ordre quelconque d'introduction. Ainsi il est possible de mélanger tout d'abord les huiles organopolysiloxanes **C** et les charges **F** et d'ajouter ensuite à l'empâtage obtenu les réticulants **D,** les composés **E** et le catalyseur selon l'invention. Il est également possible de mélanger les huiles **C,** les réticulants **D,** les composés **E** et les charges **F** et d'ajouter ultérieurement le catalyseur selon l'invention. Au cours de ces opérations, les mélanges peuvent être chauffés à une température comprise dans l'intervalle 50-180°C sous la pression atmosphérique ou sous une pression réduite afin de favoriser le départ de matières volatiles.

Les compositions mono-composantes, conformes à l'invention, utilisées telles quelles, c'est-à-dire non diluées, ou sous forme de dispersions dans des diluants, sont stables au stockage en l'absence d'eau et durcissent dès les basses températures (après départ des solvants dans le cas des dispersions) en présence d'eau pour former des élastomères.

Après le dépôt des compositions telles quelles, sur des substrats solides, en atmosphère humide, on constate qu'un processus de durcissement en élastomères se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

Par ailleurs le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions mono-composantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

La fabrication des compositions bi-composantes (non revendiquées) s'effectue également par mélange des divers constituants dans des appareils appropriés. Pour obtenir des compositions homogènes, il est préférable de mélanger tout d'abord les polymères **A** avec les charges **C** ; l'ensemble peut être chauffé au moins 30 minutes à une température supérieure à 80°C, de manière à parfaire le mouillage des charges par les huiles. Au mélange obtenu, porté de préférence à une température inférieure à 80°C, par exemple de l'ordre de la température ambiante, peuvent être ajoutés les autres constituants, c'est-à-dire les agents réticulants, le catalyseur et éventuellement des additifs et adjuvants divers et même de l'eau.

Les compositions conformes à l'invention peuvent être employées pour de multiples applications comme le jointoiement et/ou le collage dans l'industrie du bâtiment, l'industrie du transport (exemples : automobile, aérospatiale, ferroviaire, maritime et aéronautique), l'assemblage des matériaux les plus divers (métaux, matières plastiques, caoutchoucs naturels et synthétiques, bois, cartons, polycarbonate, faïence, brique, céramique, verre, pierre, béton et éléments de maçonnerie), l'isolation de conducteurs électriques, l'enrobage de circuits électroniques et la préparation de moules servant à la fabrication d'objets en résines ou mousses synthétiques.

Ainsi, il est possible de préparer un système bicomposant précurseur de la composition organopolysiloxanique selon l'invention et telle que définie ci-dessus et vulcanisable en élastomère silicone par des réactions de polycondensation et caractérisé en ce qu'il se présente en deux parties **P1** et **P2** distinctes destinées à être mélangées pour former ladite composition, et en ce que l'une de ces parties comprend le complexe ou sel métallique **A** selon l'invention et tel que défini ci-dessus comme catalyseur de la réaction de polycondensation d'organopolysiloxanes et l'agent de réticulation **D** alors que l'autre partie est exempte des espèces précitées et comprend:
- pour 100 parties en poids de l'huile (ou des huiles) polyorganosiloxane(s) **C** susceptible(s) de réticuler par polycondensation en un élastomère,
- de 0.001 à 10 partie(s) en poids d'eau.

Un autre objet de l'invention consiste aussi en une composition polyorganosiloxanique monocomposant stable au stockage en l'absence d'humidité et réticulant, en présence d'eau, en élastomère, caractérisée en ce qu'elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- un catalyseur de la réaction de polycondensation qui est le complexe métallique A selon l'invention et tel que défini ci-dessus.

Des bases mono-composantes sont décrites en détail par exemple dans les brevets EP 141 685, EP 147 323, EP 102 268, EP 21 859, FR 2 121 289 et FR 2 121 631, cités en référence.

A ces bases mono-composantes peuvent être ajoutés des promoteurs d'adhérence **E** choisis par exemple parmi les composés organosiliciés portant à la fois, d'une part, des groupes organiques substitués par des radicaux choisis dans le groupe des radicaux amino, uréido, isocyanate, époxy, alkènyle, isocyanurate, hydentoile, guanidino et mercaptoester et, d'autre part des groupes hydrolysables, en général des groupes alcoxy liés aux atomes de silicium. Des exemples de tels agents d'adhérence sont décrits dans les brevets américains US 3 517 001, US 4 115 356, US 4 180 642, US 4 273 698, US 4 356 116 et dans les brevets européens EP 31 996 et EP 74 001.

Des bases bi-composantes sont décrites en détail par exemple dans les brevets EP 118 325, EP 117 772, EP 10 478, EP 50 358, EP 184 966, US 3 801 572 et US 3 888 815, cités comme référence.

Un autre objet de l'invention consiste en l'utilisation d'un complexe ou sel métallique A selon l'invention et tel que défini ci-dessus comme catalyseur de la réaction de polycondensation d'organopolysiloxanes Il est possible d'obtenir un élastomère obtenu par réticulation et durcissement du système bi-composant tel que décrit ci-dessus, ou de la composition selon l'invention et telle que décrite ci-dessus.

D'autres avantages et caractéristiques de la présente invention apparaîtront à la lecture des exemples suivants donnés à titre illustratif nullement limitatif.

### EXEMPLES

### EXEMPLE 1 : Synthèse des catalyseurs

### Synthèse des catalyseurs (16) et (18):

**(16):** [Mo(O₂)(*Cy-acac)*₂] avec *Cy-acac* = l'anion 2-acétylcyclohexanonato ou l'anion énolate de la 2-acétylcyclohexanone - MoO₂(2-acétylcyclohexanonato)₂,
**(18):** [Mo(O₂)*(Cp-aca_{C})₂*] avec *Cp-acac* = l'anion 2-acétylcyclopentanonato ou l'anion énolate de la 2-acétylcyclopentanone

A une solution de 30 mmol de molybdate de sodium hydraté (7.26 g) dans 50 ml d'eau acidifiée par de l'acide chlorhydrique 5N à pH 1 (10 ml) sous forte agitation, sont ajoutées sur 5 min 75 mmol de β-dicétone (2-acétylcyclopentanone : 9.46 g, 2-acétylcyclohexanone : 10.51 g). La solution passe du jaune au vert. L'agitation est poursuivie 5h à température ambiante et le précipité formé est filtré puis lavé par de l'eau. Après séchage à 70°C sous 3 mbar sont obtenus respectivement 10.51 g de **(16)** sous forme d'un solide vert rendement= 87 % et 10.7 g de **(18)** sous forme d'un solide jaune vif (rendement 94 %).

| Analyses | Teneur Mo calculée (%) | Teneur Mo dosée par ICP (%) | Pics Infra-Rouge (nm) |
|---|---|---|---|
| **(16):** [MoO₂(2-acétylcyclohexanonato)₂] | 23.61 | 23.93 | 2857, 1602, 1470, 1222, 927, 900 |
| **(18):** [MoO₂*(*2-acétylcyclopentanonato*)*₂] | 25.37 | 24.77 | 2853, 1611, 1486, 1232, 932, 904 |

### Synthèse des catalyseurs mixtes (25) et (26) :

**(25):** [Fe(*EAA*)₂(2-éthylhexanoato)] avec *EAA* = l'anion éthyle acétoacétato ou l'anion énolate de l'éthyle acétoacétate - [Fe(éthyle acétoacétato)₂(2-éthylhexanoato)]; et
**(26):** [Fe(*EAA*)(2-éthylhexanoato)₂] avec *EAA* = l'anion éthyle acétoacétato ou l'anion énolate de l'éthyle acétoacétate - [Fe(éthyle acétoacétato)(2-éthylhexanoato)₂].

Une solution de 12.5 mmol de 2-éthylhexanoate de fer et de 1 ou 2 équivalents d'éthyle acétoacétate dans l'heptane (30 ml) est chauffée au reflux pendant 16 h. Après refroidissement, la solution organique rouge est lavée par une solution aqueuse d'hydrogénocarbonate à 10°C, puis par de l'eau, puis séchée et évaporée à sec. Les 2 complexes sont obtenus sous forme de solides plus ou moins pâteux.

| Analyses | Teneur Fe calculée (%) | Teneur Fe dosée par ICP (%) | Pics Infra-Rouge (nm) |
|---|---|---|---|
| **(25):** [Fe(EAA)₂(2-éthylhexanoato)] | 12.10 | Non mesurée | 2957, 2931, 1557, 1418, 1264 |
| **(26):** [Fe(EAA)(2-éthylhexanoato)₂] | 11.85 | 15.35 | 2958, 2932, 1556, 1419, 1264 |

### Synthèse des catalyseurs (32) et (33):

**(32):** [Fe(isopropyle acétoacétato)₂(2,2-diméthylbutyrato)]
**(33):** [Fe(isopropyle acétoacétato)(2,2-diméthylbutyrato)₂]

Une solution de 15 mmol de 2,2-diméthylbutyrate de fer et de 1 ou 2 équivalents d'éthyle acétoacétate dans l'heptane (35 ml) est chauffée au reflux pendant 16 h. Après refroidissement, la solution organique rouge est lavée par une solution aqueuse d'hydrogénocarbonate à 10°C, puis par de l'eau, puis séchée et évaporée à sec. Les 2 complexes sont obtenus sous forme de solides plus ou moins pâteux.

| Analyses | Teneur Fe calculée (%) | Teneur Fe dosée par ICP (%) | Pics Infra-Rouge (nm) |
|---|---|---|---|
| **(32):** Fe(iPrAA)₂(2,2-diméthylbutyrato) | 12.21 | Non mesuré | 2966, 2925,1547, 1514,1414, 1264 |
| **(33):** Fe(iPrAA)(2,2-diméthylbutyrato)₂ | 13.01 | 11.3 | 2966, 2925, 1546, 1514,1413, 1265 |

### EXEMPLE 2 : Test initial

Afin de mettre en évidence l'activité catalytique de nouvelles espèces, deux tests simples ont été mis au point.

Dans les 2 tests, on procède de la façon suivante :
- L'huile fonctionnalisée ou non, puis le catalyseur, puis le réticulant dans le cas du RTV2, puis éventuellement l'eau sont placés successivement dans un petit récipient cylindrique ouvert muni d'un barreau magnétique, et l'agitation est fixée à 300 tours/min. On mesure le temps de l'arrêt de l'agitation qui correspond à une viscosité de 1000 cP (ou mPa) environ, puis le temps où l'huile ne coule plus, le temps de formation d'une peau non collante et le temps de réticulation à coeur. L'activité de nouveaux catalyseurs est comparée à celle du dilaurate de tétra butyldistannoxane ou Tegokat 225 l'un des plus rapides catalyseurs de type dialkylétain (1.24 mmol en équivalent Sn).

### Test dit RTV2 :

L'espèce à tester est mise en contact avec une huile polydiméthylsiloxanique α,ω-dihydroxylée courte (½ équivalent par rapport à la teneur en OH, viscosité de 100 mPa.s, huile 48V100) puis un réticulant, le silicate d'éthyle est ajouté (1 équivalent /OH), ou le même volume de silicate d'éthyle dit « avancé », c'est-à-dire un mélange d'éthoxypolysiloxanes (dans ce cas > 1éq/OH).

Les quantités utilisées dans les exemples ci-dessous sauf mention sont les suivantes :
- 4.48 g d'huile 48V100 à 0.553 mmol OH/g (viscosité 100 cP ou mPa)
- 1.24 mmol d'espèce à tester (1/2 éq./OH)
- 0.52 g de silicate d'éthyle (1 éq./OH) ou le même volume de silicate « avancé » que le silicate d'éthyle (= 0.82 g)

### Test dit RTV1 :

La même huile utilisée précédemment est fonctionnalisée préalablement par le vinyltriméthoxysilane (VTMO) ; l'espèce à tester est mise en contact avec cette huile dans les mêmes conditions que précédemment, puis 2 équivalents d'eau sont ajoutés (2 éq./OH initiaux).

Les quantités utilisées dans les exemples ci-dessous sauf mention sont les suivantes :
- 4.77 g d'huile 48V100 fonctionnalisée VTMO,
- 1.24 mmol d'espèce à tester (1/2 éq./OH)
- 90 µl d'eau (ajoutés après 1 min d'agitation = t₀).

Les résultats du test RTV1 sont indiqués dans le tableau I ci-dessous :

**Tableau I: Tests RTV1**

| | Métal | Catalyseur | Temps arrêt agitation (h:min) | Temps fin coulabilité (h:min) | Temps touché non collant (h:min) | Temps réticulation (h:min) | Dur/souple après 24h |
|---|---|---|---|---|---|---|---|
| **Comparatif** | **Sn** | Tegokat225 | 00:19 | 00:22 | 00:25 | 00:34 | dur |
| **(25)** | **Fe** | [Fe(*EAA*)₂*(2-*éthylhexanoato)] | 00:13 | 00:17 | 00:27 | 00:34 | dur |
| **(26)** | **Fe** | [Fe(*EAA*)(2-éthylhexanoato)₂] | 00:34 | 00:40 | 00:47 | 01:08 | dur |
| **Comparatif** | **Fe** | [Fe(2-éthylhexanoate)₃] | Entre 7 et 24h | Entre 7 et 24h | Entre 7 et 24h | Entre 7 et 24h | dur |
| **(17)** | **Mo** | [MoO₂*(acac)₂*] | 00:20 | 00:40 | 00:40 | 01:20 | dur |
| **(15)** | **Mo** | [Mo(O₂) (*t-Bu-acac*)*₂*] | 00:42 | 00:56 | 01:20 | 01:20 | dur |
| **(16)** | **Mo** | [Mo(O₂) (*Cy-acac*)₂] | 02:15 | 02:20 | 02:25 | 02:25 | dur |

Les résultats du test RTV2, réticulant silicate d'éthyle, sont indiqués dans le tableau II ci-dessous :

**Tableau II: Tests RTV2 silicate d'éthyle**

| | métal | catalyseur | Temps arrêt agitation (h:min) | Temps fin coulabilité (h:min) | Temps touché non collant (h:min) | Temps réticulation (h:min) | Dur/mou après 24h |
|---|---|---|---|---|---|---|---|
| **Comparatif** | **Sn** | Dibutyllauratedistannoxane (Tegokat225) | 00:20 | 00:30 | 00:42 | 00:42 | dur |
| **(25)** | **Fe** | [Fe(*EAA*)₂(2-éthylhexanoato)] | 00:35 | 00:42 | 00:49 | 01:46 | dur |
| **(26)** | **Fe** | [Fe(*EAA*)(2-éthylhexanoato)₂] | 01:10 | 01:10 | 01:10 | 01:46 | dur |
| **Comparatif** | **Fe** | [Fe(2-éthylhexanoate)₃] | >7:00 | >7:00 | >7:00 | >7:00 | mou |
| **(15)** | **Mo** | [Mo(O₂) (*t-Bu-acac*)₂] | 03:30 | 05:00 | 6:23 | | dur |
| **(17)** | **Mo** | [MoO₂(Acac)₂] | 02:20 | | 02:40 | | dur |
| **(18)** | **Mo** | [Mo(O₂) (*Cp-acac*)*₂*] | 02:30 | 02:45 | 02:45 | 03:30 | dur |
| **(16)** | **Mo** | [Mo(O₂) (*Cy-acac*)₂] | 01:30 | 01:30 | 01:30 | 02:10 | dur |

Les résultats du test RTV2, réticulant silicate "avancé", sont indiqués dans le tableau III ci-dessous :

**Tableau III: Tests RTV2 silicate "avancé"**

| | métal | catalyseur | Temps arrêt agitation (h:min) | Temps fin coulabilité (h:min) | Temps touché non collant (h:min) | Temps réticulation (h:min) | Dur/mou après 24h |
|---|---|---|---|---|---|---|---|
| **comparatif** | **Fe** | [Fe(2-éthylhexanoate)₃] | | | | Pas de réticulation | liquide |
| **(15)** | **Mo** | [Mo(O₂) (*t-Bu-acac*)₂] | 01:40 | 02:00 | 2:16 | 02:30 | dur |
| **(17)** | **Mo** | [MoO₂(Acac)₂] | 02:45 | 03:00 | 3:00 | 03:30 | dur |
| **(18)** | **Mo** | [Mo(O₂)(Cp-*acac*)₂] | 05:00 | 05:00 | 05:15 | 06:00 | dur |
| **(16)** | **Mo** | [Mo(O₂)(*Cy-acac*)₂] | 01:30 | 01:40 | 01:40 | 02:00 | très dur |

### Exemple 3: Test en empâtage pour RTV1 et RTV2

Dans un second temps, certains catalyseurs sont aussi testés dans des systèmes plus proches appelés "empâtages" .

En **RTV1,** l'empâtage utilisé est préparé comme suit : à un mélange de 3464 g d'une huile α,ω-dihydroxylée de viscosité de 20000 centipoises contenant 0.066% d'OH, et de 120 g de vinyltriméthoxysilane sous agitation est ajouté 16 g d'une solution de lithine à 2 % en poids dans le méthanol, puis après 5 min 400 g de silice de pyrogénation AE55 sont ajoutés. Le mélange est dévolatilisé sous vide puis stocké à l'abri de l'humidité.

Pour chaque test, le catalyseur testé est mélangé à 50 g de cet empâtage, puis le potentiel catalytique est évalué de 3 façons :
- le temps de formation de peau (TFP), temps au bout duquel on observe une réticulation en surface, sur film de 2 mm,
- la persistance d'un toucher collant à 48h,
- la dureté (en Shore A) d'un cordon de 6 mm d'épaisseur dans de conditions régulées (23°C et 50% d'humidité relative) et sur des temps croissants (2, 3, 4,7 et 14 jours). La stabilité à haute température est aussi évaluée par des mesures de dureté réalisées sur le cordon après 7 jours à température ambiante suivis de 7 jours à 100°C.

Différents catalyseurs selon l'invention ont été testés.

A titre comparatif, comme précédemment, ont été également testés:
- un catalyseur à base d'étain: le dilaurate de dibutylétain (DLDBE).

Les résultats sont indiqués dans le tableau VI ci-dessous:

**Tableau IV : tests en empâtages RTV1**

| **Produit** | **solvant en %** | **%poids** | **TFP baton** | **Toucher collant** | **Dureté Shore A sur 6mm** | | | | | |
|---|---|---|---|---|---|---|---|---|---|---|
| | | | | **à** | **2J** | **3J** | **4J** | **7J** | **14J** | **7J TA+ 7J 100°C** |
| | | | **min** | **48h** | **> <** | **> <** | **> <** | **> <** | **> <** | **> <** |
| DLDBE Comparatif | / | 1 | 10 | non | 32 22 | | | 32 29 | | |
| [Mo(O₂) (*t-Bu-acac*)₂] | acétone 50% | 1,4 | 18 | non | 29 22 | 27 20 | 29 19 | 29 20 | 34 17 | 50 32 |

| | | | | | | | | | | |
|---|---|---|---|---|---|---|---|---|---|---|
| Nota : La dureté Shore est mesurée sur un cordon de 6 mm. Dans le tableau de résultats, le symbole « > » correspond aux valeurs de dureté mesurées sur la partie supérieure du cordon et le symbole « < » correspond aux valeurs de dureté mesurées sur la partie inférieure du cordon moins exposée à l'air ambiant que la partie supérieure. | | | | | | | | | | |

En **RTV2,** les tests sont réalisés directement sur un mélange d'une huile visqueuse dihydroxylée (48V14000) et de réticulant silicate avancé (1 g pour 22.5 g d'huile) auquel on ajoute et mélange le catalyseur. Le temps de travail ou "pot-life" est d'abord mesuré (temps au delà duquel la viscosité du mélange empêche son utilisation), puis à partir d'un autre mélange, un pion de 6 mm d'épaisseur est coulé pour les mesures de dureté dans le temps (réalisées comme précédemment en dessus et en dessous).

A titre comparatif, comme précédemment, ont été également testés:
- un catalyseur à base d'étain: le dinéodécanoate de diméthylétain (UL28).

Les résultats sont indiqués dans le tableau V ci-dessous.

**Tableau V**

| Catalyseurs | Solvant | Equivalent molaire | % poids | pot-life (min) | Dureté Shore A sur 6 mm | | | | | |
|---|---|---|---|---|---|---|---|---|---|---|
| | | | | | 1J | | 4J | | 21J | |
| | | | | | > | < | > | < | > | < |
| UL28 | non | 1 | 1,4 | 15 | 24 | 19 | 25 | 25 | 23 | 23 |
| MoO2(TMHD)2 | acétone | 1 | 0,4 | 36 | 6 | 0 | | | 25 | 25 |

| | | | | | | | | | | |
|---|---|---|---|---|---|---|---|---|---|---|
| Nota : La dureté Shore est mesurée sur un pion de 6 mm. Dans le tableau de résultats, le symbole « > » correspond aux valeurs de dureté mesurées sur la partie supérieure du pion et le symbole « < » correspond aux valeurs de dureté mesurées sur la partie inférieure du pion moins exposée à l'air ambiant que la partie supérieure | | | | | | | | | | |

## Revendications

1. Composition polyorganosiloxanique monocomposante stable au stockage en l'absence d'humidité et réticulant en présence d'eau en élastomère, **caractérisée en ce qu'**elle comprend:
- au moins un polyorganopolysiloxane linéaire réticulable présentant des extrémités fonctionnalisées de type alcoxy, oxime, acyle et /ou énoxy, de préférence alcoxy,
- une charge, et
- un catalyseur de la réaction de polycondensation qui est un complexe ou sel métallique **A** de formule **(1), (2)** ou **(3)** suivante:
[M(L¹)ᵣ₁(L²)ᵣ₂(Y)ₓ] **(1)**
dans laquelle:
- r1 ≥ 1, r2> 0 et x≥ 0 ;
- le symbole M représente un métal sélectionné parmi le groupe constitué par: le cuivre, l'argent, le scandium, le cérium, l'ytterbium, le molybdène, le germanium et le manganèse;
- le symbole L¹ représente un ligand qui est un anion β-dicarbonylato ou l'anion énolate d'un composé β-dicarbonylé, ou un anion acétylacétato dérivé d'un β-cétoester et lorsque r1 ≥ 2, les symboles L¹ sont identiques ou différents, avec la condition supplémentaire que lorsque le symbole M représente le cuivre alors le symbole L¹ n'est pas l'acétylacétonate (acac),
- le symbole L² représente un ligand anionique qui est différent de L¹ et lorsque r2 ≥ 2, les symboles L² sont identiques ou différents, et
- le symbole Y représente un ligand neutre et lorsque x ≥ 2, les symboles Y sont identiques ou différents,
[Fe(L³)ᵣ₃(L⁴)ᵣ₄(Y')_{x'}] **(2)**
dans laquelle:
- r3 ≥ 1 ; r4 > 0 et x'≥ 0 ;
- le symbole L³ représente un ligand qui est un anion β-cétoestérato ou l'anion énolate d'un composé β-cétoester et lorsque r3 ≥ 2, les symboles L³ sont identiques ou différents;
- le symbole L⁴ représente un ligand anionique qui est différent de L³ et lorsque r4≥ 2, les symboles L⁴ sont identiques ou différents, et
- le symbole Y' représente un ligand neutre et lorsque x' ≥ 2, les symboles Y' sont identiques ou différents, et
[Fe(L⁵)ᵣ₅(L⁴)ᵣ₄(Y')_{x'}] **(3)**
dans laquelle:
- r5 ≥ 1 ; r4 > 0 et x'≥ 0 ;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque r5 ≥ 2, les symboles L⁵ sont identiques ou différents;
- le symbole L⁴ représente un ligand anionique qui est différent de L⁵ et lorsque r4 ≥ 2, les symboles L⁴ sont identiques ou différents,
- le symbole Y' représente un ligand neutre et lorsque x' ≥ 2, les symboles Y' sont identiques ou différents et
- L² et L⁴ sont des ligands anioniques sélectionnés dans le groupe constitué par les anions: fluoro (F⁻), chloro(Cl⁻), triiodo(1⁻)(I₃)⁻, difluorochlorato(1⁻)[ClF₂]⁻, hexafluoroiodato(1⁻)[IF₆]⁻, oxochlorato(1⁻) (CIO)⁻, dioxochlorato(1⁻)(CIO₂)⁻, trioxochlorato(1⁻)(CIO₃)⁻, tétraoxochlorato(1⁻)(CIO₄)⁻, hydroxo (OH)⁻, mercapto(SH)⁻, sélanuro(SeH)⁻, hyperoxo(O₂)⁻, ozonido(O₃)⁻, hydroxo(OH⁻), hydrodisulfuro (HS₂)⁻, méthoxo(CH₃O)⁻, éthoxo(C₂H₅O)⁻, propoxydo(C₃H₇O)⁻, méthylthio(CH₃S)⁻, éthanethiolato (C₂H₅S)⁻, 2-chloroéthanolato(C₂H₄CIO)⁻, phénoxydo(C₆H₅O)⁻, phénylthio(C₆H₅S)⁻, 4-nitrophénolato [C₆H₄(NO₂)O]⁻, formato(HCO₂)⁻, acétato(CH₃CO₂)⁻, propionato(CH₃CH₂CO₂)⁻, azoturo(N₃)⁻, cyano(CN)⁻, cyanato(NCO)⁻, thiocyanato(NCS)⁻, sélénocyanato(NCSe)⁻, amido(NH₂)⁻, phosphino (PH₂)⁻, chloroazanuro(ClHN)⁻, dichloroazanuro(Cl₂N)⁻, [méthanaminato(1⁻)](CH₃NH)⁻, diazénuro (HN=N)⁻, diazanuro(H₂N-NH)⁻, diphosphénuro(HP=P)⁻, phosphonito(H₂PO)⁻, phosphinato(H₂PO₂)⁻, carboxylato, énolato, les amidures, alkylato et arylato.

2. Composition organopolysiloxanique monocomposante selon la revendication 1, **caractérisée en ce que** le catalyseur de polycondensation est un complexe métallique **A** de formule **(4), (5)** ou **(6)** suivante:
[M(L¹)₁₁(L²)₁₂] **(4)**
dans laquelle:
- l₁ ≥ 1 et l₂ > 0;
- le symbole M représente un métal sélectionné parmi le groupe constitué par: le cuivre, l'argent, le scandium, le cérium, l'ytterbium, le molybdène, le germanium et le manganèse;
- le symbole L¹ représente un ligand qui est un anion β-dicarbonytato ou l'anion énolate d'un composé β-dicarbonylé, ou un anion acétylacétato dérivé d'un β-cétoester et lorsque l₁ ≥ 2, les symboles L¹ sont identiques ou différents, avec la condition supplémentaire que lorsque le symbole M représente le cuivre alors le symbole L¹ n'est pas l'acétylacétonate (acac),
- le symbole L² représente un ligand anionique différent de L¹ et lorsque l₂ ≥ 2, les symboles L² sont identiques ou différents,
[Fe(L³)₁₃(L⁴)₁₄] **(5)**
dans laquelle:
- l₃ ≥ 1, l₄ > 0 et l₃ +l₄=3;
- le symbole L³ représente un ligand qui un anion β-cétoesterato ou l'anion énolate d'un composé β-cétoester et lorsque l₃ ≥ 2, les symboles L³ sont identiques ou différents;
- le symbole L⁴ représente un ligand anionique différent de L³ et lorsque l₄ ≥ 2, les symboles L⁴ sont identiques ou différents, et
[Fe(L⁵)₁₅(L⁴)₁₄] **(6)**
dans laquelle:
- l₅ ≥ 1 ; l₄ > 0 et l₄+l₅=3;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque l₅ ≥ 2, les symboles L⁵ sont identiques ou différents,
- le symbole L⁴ représente un ligand anionique qui est différent de L⁵ et lorsque l₄ ≥ 2, les symboles L⁴ sont identiques ou différents et
- L² et L⁴ sont des ligands anioniques sélectionnés dans le groupe constitué par les anions: fluoro (F⁻), chloro (Cl⁻), triiodo(1⁻)(I₃)⁻, difluorochlorato(1⁻)[ClF₂]⁻, hexafluoroiodato(1⁻)[IF₆]⁻, oxochlorato(1⁻) (CIO)⁻, dioxochlorato(1⁻)(CIO₂)⁻, trioxochlorato(1⁻)(CIO₃)⁻, tétraoxochlorato(1⁻)(CIO₄)⁻, hydroxo (OH)⁻, mercapto (SH)⁻, sélanuro (SeH)⁻, hyperoxo(O₂)⁻, ozonido(O₃)⁻, hydroxo(OH⁻), hydrodisulfuro (HS₂)⁻, méthoxo(CH₃O)⁻, éthoxo(C₂H₅O)⁻, propoxydo(C₃H₇O)⁻, méthylthio(CH₃S)⁻, éthanethiolato (C₂H₅S)⁻, 2-chloroéthanolato(C₂H₄CIO)⁻, phénoxydo(C₆H₅O)⁻, phénylthio (C₆H₅S)⁻, 4-nitrophénolato [C₆H₄(NO₂)O]⁻, formato(HCO₂)⁻, acétato(CH₃CO₂)⁻, propionato(CH₃CH₂CO₂)⁻, azoturo(N₃)⁻, cyano(CN)⁻, cyanato (NCO)⁻, thiocyanato (NCS)⁻, sélénocyanato(NCSe)⁻, amido (NH₂)⁻, phosphino (PH₂)⁻, chloroazanuro(ClHN)⁻, dichloroazanuro(Cl₂N)⁻, [méthanaminato(1⁻)](CH₃NH)⁻, diazénuro (HN=N)⁻, diazanuro(H₂N-NH)⁻, diphosphénuro (HP=P)⁻, phosphonito(H₂PO)⁻, phosphinato(H₂PO₂)⁻, carboxylato, énolato, les amidures, alkylato et arylato.

3. Composition organopolysiloxanique monocomposante selon la revendication 1 **caractérisée en ce que** le catalyseur de polycondensation est un complexe ou sel métallique **A** de formule **(1'), (2')** ou **(3')** suivante:
[M(L¹)ᵣ₁(L²)ᵣ₂(Y)ₓ] **(1')**
dans laquelle:
- r1 ≥ 1, r2 > 0 et x≥ 0 ;
- le symbole M représente un métal sélectionné parmi le groupe constitué par: le cérium, le molybdène et le manganèse;
- le symbole L¹ représente un ligand qui est un anion β-dicarbonylato ou l'anion énolate d'un composé β-dicarbonylé, ou un anion acétylacétato dérivé d'un β-cétoester et lorsque r1 ≥ 2, les symboles L¹ sont identiques ou différents
- le symbole L² représente un ligand anionique qui est différent de L¹ et lorsque r2 ≥ 2, les symboles L² sont identiques ou différents, et
- le symbole Y représente un ligand neutre et lorsque x ≥ 2, les symboles Y sont identiques ou différents,
[Fe(L³)ᵣ₃(L⁴)ᵣ₄(Y')_{x'}] **(2')**
dans laquelle:
- r3 ≥ 1 ; r4> 0 et x'≥ 0 ;
- le symbole L³ représente un ligand qui est un anion β-cétoestérato ou l'anion énolate d'un composé β-cétoester et lorsque r3 ≥ 2, les symboles L³ sont identiques ou différents;
- le symbole L⁴ représente un ligand anionique qui est différent de L³ et lorsque r4 ≥ 2, les symboles L⁴ sont identiques ou différents, et
- le symbole Y' représente un ligand neutre et lorsque x' ≥ 2, les symboles Y' sont identiques ou différents, et
[Fe(L⁵)ᵣ₅(L⁴)ᵣ₄(Y')_{x'}] **(3')**
dans laquelle:
- r5 ≥ 1 ; r4 >0 et x'≥ 0 ;
- le symbole L⁵ représente un ligand qui est un anion β-dicétonato choisi parmi le groupe constitué par : 3,5-heptanedionato, 2,6-diméthyl-3,5-heptanedionato et 2,2,6,6-tétraméthyl-3,5-heptanedionato et lorsque r5 ≥ 2, les symboles L⁵ sont identiques ou différents;
- le symbole L⁴ représente un ligand anionique qui est différent de L⁵ et lorsque r4 ≥ 2, les symboles L⁴ sont identiques ou différents,
- le symbole Y' représente un ligand neutre et lorsque x' ≥ 2, les symboles Y' sont identiques ou différents, et
- L² et L⁴ sont des ligands anioniques sélectionnés dans le groupe constitué par les anions: fluoro(F⁻), chloro(Cl⁻), triiodo(1⁻)(I₃)⁻, difluorochlorato(1⁻)[ClF₂]⁻, hexafluoroiodato(1⁻)[IF₆]⁻, oxochlorato(1⁻) (CIO)⁻, dioxochlorato(1⁻)(CIO₂)⁻, trioxochlorato(1⁻)(CIO₃)⁻, tétraoxochlorato(1⁻)(CIO₄)⁻, hydroxo (OH)⁻, mercapto (SH)⁻, sélanuro (SeH)⁻, hyperoxo(O₂)⁻, ozonido(O₃)⁻, hydroxo(OH⁻), hydrodisulfuro (HS₂)⁻, méthoxo(CH₃O)⁻, éthoxo(C₂H₅O)⁻, propoxydo(C₃H₇O)⁻, méthylthio(CH₃S)⁻, éthanethiolato (C₂H₅S)⁻, 2-chloroéthanolato(C₂H₄CIO)⁻, phénoxydo (C₆H₅O)⁻, phénylthio(C₆H₅S)⁻, 4-nitrophénolato [C₆H₄(NO₂)O]⁻, formato(HCO₂)⁻, acétato(CH₃CO₂)⁻, propionato(CH₃CH₂CO₂)⁻, azoturo(N₃)⁻, cyano(CN)⁻, cyanato (NCO)⁻, thiocyanato (NCS)⁻, sélénocyanato(NCSe)⁻, amido (NH₂)⁻, phosphino (PH₂)⁻, chloroazanuro(ClHN)⁻, dichloroazanuro(Cl₂N)⁻, [méthanaminato(1⁻)](CH₃NH)⁻, diazénuro (HN=N)⁻, diazanuro(H₂N-NH)⁻, diphosphénuro (HP=P)⁻, phosphonito(H₂PO)⁻, phosphinato(H₂PO₂)⁻, carboxylato, énolato, les amidures, alkylato et arylato.

4. Composition organopolysiloxanique monocomposante selon l'une quelconque des revendications précédentes, **caractérisée en ce que** le catalyseur de polycondensation est un complexe ou sel métallique **A** choisi parmi le groupe constitué par les complexes suivants:
**(15):** [Mo(O₂)(*t-Bu-acac*)₂] avec *(t-Bu-acac)* = l'anion 2,2,6,6-tétraméthyl-3,5-heptanedionato ou l'anion énolate de la 2,2,6,6-tétraméthyl-3,5-heptanedione,
**(16):** [Mo(O₂)(*Cy-acac*)₂] avec *Cy-acac* = l'anion 2-acétylcyclohexanonato ou l'anion énolate de la 2-acétylcyclohexanone,
**(17):** [Mo(O₂)(*acac*)₂] avec *acac* = l'anion 2,4-pentanedionato ou l'anion énolate de la 2,4-pentanedione,
**(18):** [Mo(O₂)*(Cp-acac)₂*] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)],
**(33):** [Fe(isopropyle acétoacétato)(2,2-diméthylbutyrato)₂], et

5. Composition organopolysiloxanique monocomposante selon l'une quelconque des revendications 1 à 3 **caractérisée en ce que** le ligand β-dicarbonylato L¹ est un anion β-dicétonato dérivé d'une β-dicétone ou un anion β-cétoesterato dérivé d'un β-cétoester de formule suivante:
R¹COCHR²COR³ **(34)**
dans laquelle :
- R¹ représente un radical hydrocarboné linéaire ou ramifié, substitué ou non, en C₁-C₃₀ ou un aromatique substitué ou non,
- R² est un hydrogène ou un radical hydrocarboné, en général alkyle, présentant avantageusement au plus 4 atomes de carbone ;
- R³ représente un radical hydrocarboné en C₁-C₃₀ linéaire, cyclique ou ramifié, substitué ou non, un aromatique substitué ou non, ou un radical -OR⁴ avec R⁴ qui représente un radical hydrocarboné en C₁-C₃₀ linéaire, cyclique ou ramifié, substitué ou non, avec
- R¹ et R² peuvent être reliés pour former un cycle, et
- R² et R⁴ peuvent être reliés pour former un cycle, et
avec la condition supplémentaire que lorsque le symbole M représente le cuivre alors le symbole L¹ n'est pas l'acétylacétonate (acac).

6. Composition organopolysiloxanique monocomposante selon la revendication 6 **caractérisé en ce que** la β-dicétone de formule **(34)** est choisie parmi le groupe constitué par les β-dicétones: 2,4-pentanedione (*acac*); l'hexanedione-2,4; heptanedione-2,4; heptanedione-3,5; l'éthyl-3-pentanedione-2,4; méthyl-5-hexanedione-2,4; octanedione-2,4; octanedione-3,5; diméthyl-5,5-hexanedione-2,4; méthyl-6-heptanedione-2,4; diméthyl-2,2-nonanedione-3,5; diméthyl-2,6 heptanedione-3,5; 2-acétylcyclohexanone(*Cy-acac*); 2,2,6,6-tétraméthyl-3,5-heptanedione(*t-Bu-acac*); 1,1,1,5,5,5-hexafluoro-2,4-pentanedione(*F-acac*)]; benzoylacétone; dibenzoyl-méthane; 3-méthyl-2,4-pentadione; 3-acétyl-pentane-2-one; 3-acétyl-2-hexanone; 3-acétyl-2-heptanone; 3-acétyl-5-méthyl-2-hexanone; stéaroylbenzoylméthane; octanoylbenzoylméthane; 4-t-butyl-4'-méthoxy-dibenzoylméthane; 4,4'-diméthoxy-dibenzoylméthane et 4,4'-di-tert-butyl-dibenzoylméthane.

7. Composition organopolysiloxanique monocomposante selon l'une quelconque des revendications 1 à 3 **caractérisée en ce que** le ligand β-dicarbonylato L¹ est un anion β-cétoestérato choisi parmi le groupe constitué par les anions dérivés des composés suivants: les esters méthylique, éthylique, n-propylique, isopropylique, n-butylique, sec-butylique, isobutylique, tertiobutylique, isopentylique, n-hexylique, n-octylique, méthyl-1 heptylique, n-nonylique, n-décylique et n-dodécylique de l'acide acétylacétique.

8. Composition organopolysiloxanique monocomposante selon l'une quelconque des revendications 1 à 3 **caractérisée en ce que** L² et L⁴ sont des ligands anioniques sélectionnés dans le groupe constitué par les anions: acétate, oxalate, propionate, butyrate, isobutyrate, triméthylacétate, diéthylacétate, benzoate, 2-éthylhexanoate, stéarate, méthoxyde, éthoxyde, isopropoxyde, tert-butoxyde, tert-pentoxyde, 8-hydroxyquinolinate, naphténate, tropolonate et l'anion oxo O²⁻.

9. Elastomère obtenu par réticulation et durcissement de la composition monocomposante telle que définie selon l'une quelconque des revendications 1 à 8.

10. Utilisation comme catalyseur de la réaction de polycondensation d'organopolysiloxanes des composés de formules suivantes:
**(15):** [Mo(O₂)(*t-Bu-acac*)₂] avec *(t-Bu-acac)* = l'anion 2,2,6,6-tétraméthyl-3,5-heptanedionato ou l'anion énolate de la 2,2,6,6-tétraméthyl-3,5-heptanedione,
**(16):** [Mo(O₂)(*Cy-acac*)₂] avec *Cy-acac* = l'anion 2-acétylcyclohexanonato ou l'anion énolate de la 2-acétylcyclohexanone,
**(17):** [Mo(O₂)(*acac*)₂] avec *acac* = l'anion 2,4-pentanedionato ou l'anion énolate de la 2,4-pentanedione,
**(18):** [Mo(O₂)*(Cp-acac)₂*] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)],
**(33):** [Fe(isopropyle acétoacétato)(2,2-diméthylbutyrato)₂]

11. Composés de formules suivantes:
**(16):** [Mo(O₂)(*Cy-acac*)₂] avec *Cy-acac* = l'anion 2-acétylcyclohexanonato ou l'anion énolate de la 2-acétylcyclohexanone,
**(18):** [Mo(O₂)*(Cp-acac)₂*] avec *Cp-acac* = l'anion 2-acétylcyclopentanonato ou l'anion énolate de la 2-acétylcyclopentanone,
**(25):** [Fe(*EAA*)₂(2-éthylhexanoato)] avec *EAA* = l'anion éthyle acétoacétato ou l'anion énolate de l'éthyle acétoacétate,
**(26):** [Fe(*EAA*)(2-éthylhexanoato)₂] avec *EAA* = l'anion éthyle acétoacétato ou l'anion énolate de l'éthyle acétoacétate,
**(32):** [Fe(isopropyle acétoacétato)₂(2,2-diméthylbutyrato)], et
**(33):** [Fe(isopropyle acétoacétato)(2,2-diméthylbutyrato)₂].

## Patentansprüche

1. Einkomponentige Polyorganosiloxanzusammensetzung, die in Abwesenheit von Feuchtigkeit lagerstabil ist und in Gegenwart von Wasser zu einem Elastomer vernetzt, **dadurch gekennzeichnet, dass** sie Folgendes umfasst:
- mindestens ein vernetzbares lineares Polyorganopolysiloxan mit funktionalisierten Enden vom Alkoxy-, Oxim-, Acyl- und/oder Enoxy-Typ, vorzugsweise vom Alkoxy-Typ,
- einen Füllstoff und
- einen Katalysator für die Polykondensationsreaktion, bei dem es sich um einen Metallkomplex oder ein Metallsalz **A** der folgenden Formel **(1), (2)** oder **(3)** handelt:
[M(L¹)ᵣ₁(L²)ᵣ₂(Y)ₓ] **(1)**
wobei:
- r1 ≥ 1, r2 > 0 und x ≥ 0;
- das Symbol M für ein Metall aus der Gruppe bestehend aus Kupfer, Silber, Scandium, Cer, Ytterbium, Molybdän, Germanium und Mangan steht,
- das Symbol L¹ für einen Liganden steht, bei dem es sich um ein β-Dicarbonylato-Anion oder das Enolat-Anion einer β-Dicarbonylverbindung oder ein von einem β-Ketoester abgeleitetes Acetylacetonato-Anion handelt, und im Fall von r1 ≥ 2 die Symbole L¹ gleich oder verschieden sind, mit der zusätzlichen Maßgabe, dass dann, wenn das Symbol M für Kupfer steht, das Symbol L¹ nicht für Acetylacetonat (acac) steht,
- das Symbol L² für einen anionischen Liganden steht, der von L¹ verschieden ist, und im Fall von r2 ≥ 2 die Symbole L² gleich oder verschieden sind und
- das Symbol Y für einen neutralen Liganden steht und im Fall von x ≥ 2 die Symbole Y gleich oder verschieden sind,
[Fe(L³)ᵣ₃(L⁴)ᵣ₄(Y')_{x'}] **(2)**
wobei:
- r3 ≥ 1; r4 > 0 und x' ≥ 0;
- das Symbol L³ für ein β-Ketoesterato-Anion oder das Enolat-Anion einer β-Ketoesterverbindung steht und im Fall von r3 ≥ 2 die Symbole L³ gleich oder verschieden sind,
- das Symbol L⁴ für einen anionischen Liganden steht, der von L³ verschieden ist, und im Fall von r4 ≥ 2 die Symbole L⁴ gleich oder verschieden sind und
- das Symbol Y' für einen neutralen Liganden steht und im Fall von x' ≥ 2 die Symbole Y' gleich oder verschieden sind, und
[Fe(L⁵)ᵣ₅(L⁴)ᵣ₄(Y')_{x'}] **(3)**
wobei:
- r5 ≥ 1; r4 > 0 und x' ≥ 0;
- das Symbol L⁵ für ein β-Diketonato-Anion aus der Gruppe bestehend aus 3,5-Heptandionato, 2,6-Dimethyl-3,5-heptandionato und 2,2,6,6-Tetramethyl-3,5-heptandionato steht im Fall von r5 ≥ 2 die Symbole L⁵ gleich oder verschieden sind,
- das Symbol L⁴ für einen anionischen Liganden steht, der von L⁵ verschieden ist, und im Fall von r4 ≥ 2 die Symbole L⁴ gleich oder verschieden sind,
- das Symbol Y' für einen neutralen Liganden steht und im Fall von x' ≥ 2 die Symbole Y' gleich oder verschieden sind und
- L² und L⁴ anionische Liganden sind, die aus der Gruppe bestehend aus den folgenden Anionen ausgewählt sind: Fluoro (F⁻), Chloro(Cl⁻), Triiodo(1⁻)(I₃)⁻, Difluorochlorato(1⁻)[ClF₂]⁻, Hexafluoroiodato(1⁻)[IF₆]⁻, Oxochlorato(1⁻) (ClO)⁻, Dioxochlorato(1⁻)(ClO₂)⁻, Trioxochlorato(1⁻)(ClO₃)⁻, Tetraoxochlorato(1⁻) (ClO₄)⁻, Hydroxo(OH)⁻, Mercapto (SH)⁻, Selanido (SeH)⁻, Hyperoxo(O₂)⁻, Ozonido(O₃)⁻, Hydroxo (OH⁻), Hydrodisulfido(HS₂)⁻, Methoxo(CH₃O)⁻, Ethoxo(C₂H₅O)⁻, Propoxido (C₃H₇O)⁻, Methylthio (CH₃S)⁻, Ethanthiolato(C₂H₅S)⁻, 2-Chlorethanolato(C₂H₄ClO)⁻, Phenoxido (C₆H₅O)⁻, Phenylthio(C₆H₅S)⁻, 4-Nitrophenolato [C₆H₄(NO₂)O]⁻, Formiato(HCO₂)⁻, Acetato (CH₃CO₂)⁻, Propionato(CH₃CH₂CO₂)⁻, Nitrido(N₃)⁻, Cyano (CN)⁻, Cyanato (NCO)⁻, Thiocyanato (NCS)⁻, Selenocyanato (NCSe)⁻, Amido(NH₂)⁻, Phosphino (PH₂)⁻, Chlorazanido(ClHN)⁻, Dichlorazanido (Cl₂N)⁻, [Methanaminato(1⁻)](CH₃NH)⁻, Diazenido (HN=N)⁻, Diazanido(H₂N-NH)⁻, Diphosphenido (HP=P)⁻, Phosphonito(H₂PO)⁻, Phosphinato (H₂PO₂)⁻, Carboxylato, Enolato, Amiden, Alkylato und Arylato.

2. Einkomponentige Organopolysiloxanzusammensetzung nach Anspruch 1, **dadurch gekennzeichnet, dass** es sich bei dem Polykondensationskatalysator um einen Metallkomplex **A** der folgenden Formel **(4), (5)** oder **(6)** handelt:
[M(L¹)₁₁(L²)₁₂] **(4)**
wobei:
- l₁ ≥ 1 und l₂ > 0;
- das Symbol M für ein Metall aus der Gruppe bestehend aus Kupfer, Silber, Scandium, Cer, Ytterbium, Molybdän, Germanium und Mangan steht,
- das Symbol L¹ für einen Liganden steht, bei dem es sich um ein β-Dicarbonylato-Anion oder das Enolat-Anion einer β-Dicarbonylverbindung oder ein von einem β-Ketoester abgeleitetes Acetylacetonato-Anion handelt, und im Fall von l₁ ≥ 2 die Symbole L¹ gleich oder verschieden sind, mit der zusätzlichen Maßgabe, dass dann, wenn das Symbol M für Kupfer steht, das Symbol L¹ nicht für Acetylacetonat (acac) steht,
- das Symbol L² für einen anionischen Liganden steht, der von L¹ verschieden ist, und im Fall von l₂ ≥ 2 die Symbole L² gleich oder verschieden sind,
[Fe(L¹)₁₃(L¹)₁₄] **(5)**
wobei:
- l₃ ≥ 1; l₄ > 0 und l₃ + l₄ = 3;
- das Symbol L³ für ein β-Ketoesterato-Anion oder das Enolat-Anion einer β-Ketoesterverbindung steht und im Fall von L₃ ≥ 2 die Symbole L³ gleich oder verschieden sind,
- das Symbol L⁴ für einen anionischen Liganden steht, der von L³ verschieden ist, und im Fall von l₄ ≥ 2 die Symbole L⁴ gleich oder verschieden sind, und
[Fe(L⁵)₁₅(L⁴)₁₄] **(6)**
wobei:
- l₅ ≥ 1; l₄ > 0 und l₄ + l₅ = 3;
- das Symbol L⁵ für ein β-Diketonato-Anion aus der Gruppe bestehend aus 3,5-Heptandionato, 2,6-Dimethyl-3,5-heptandionato und 2,2,6,6-Tetramethyl-3,5-heptandionato steht im Fall von l₅ ≥ 2 die Symbole L⁵ gleich oder verschieden sind,
- das Symbol L⁴ für einen anionischen Liganden steht, der von L⁵ verschieden ist, und im Fall von l₄ ≥ 2 die Symbole L⁴ gleich oder verschieden sind, und
- L² und L⁴ anionische Liganden sind, die aus der Gruppe bestehend aus den folgenden Anionen ausgewählt sind: Fluoro (F⁻), Chloro(Cl⁻), Triiodo(1⁻)(I₃)⁻, Difluorochlorato(1⁻)[ClF₂]⁻, Hexafluoroiodato(1⁻)[IF₆]⁻, Oxochlorato(1⁻) (ClO)⁻, Dioxochlorato(1⁻)(ClO₂)⁻, Trioxochlorato(1⁻)(ClO₃)⁻, Tetraoxochlorato(1⁻) (ClO₄)⁻, Hydroxo(OH)⁻, Mercapto(SH)⁻, Selanido (SeH)⁻, Hyperoxo(O₂)⁻, Ozonido(O₃)⁻, Hydroxo (OH⁻), Hydrodisulfido(HS₂)⁻, Methoxo(CH₃O)⁻, Ethoxo(C₂H₅O)⁻, Propoxido(C₃H₇O)⁻, Methylthio (CH₃S)⁻, Ethanthiolato(C₂H₅S)⁻, 2-Chlorethanolato(C₂H₄ClO)⁻, Phenoxido (C₆H₅O)⁻, Phenylthio(C₆H₅S)⁻, 4-Nitrophenolato [C₆H₄(NO₂)O]⁻, Formiato(HCO₂)⁻, Acetato (CH₃CO₂)⁻, Propionato(CH₃CH₂CO₂)⁻, Nitrido(N₃)⁻, Cyano (CN)⁻, Cyanato (NCO)⁻, Thiocyanato (NCS)⁻, Selenocyanato (NCSe)⁻, Amido (NH₂)⁻, Phosphino (PH₂)⁻, Chlorazanido(ClHN)⁻, Dichlorazanido (Cl₂N)⁻, [Methanaminato(1⁻)](CH₃NH)⁻, Diazenido (HN=N)⁻, Diazanido(H₂N-NH)⁻, Diphosphenido (HP=P)⁻, Phosphonito (H₂PO)⁻, Phosphinato (H₂PO₂)⁻, Carboxylato, Enolato, Amiden, Alkylato und Arylato.

3. Einkomponentige Organopolysiloxanzusammensetzung nach Anspruch 1, **dadurch gekennzeichnet, dass** es sich bei dem Polykondensationskatalysator um einen Metallkomplex oder ein Metallsalz **A** der folgenden Formel **(1'), (2')** oder **(3')** handelt:
[M(L¹)ᵣ₁(L²)ᵣ₂(Y)ₓ] **(1')**
wobei:
- r1 ≥ 1, r2 > 0 und x ≥ 0;
- das Symbol M für ein Metall aus der Gruppe bestehend aus Cer, Molybdän und Mangan steht,
- das Symbol L¹ für einen Liganden steht, bei dem es sich um ein β-Dicarbonylato-Anion oder das Enolat-Anion einer β-Dicarbonylverbindung oder ein von einem β-Ketoester abgeleitetes Acetylacetonato-Anion handelt, und im Fall von r1 ≥ 2 die Symbole L¹ gleich oder verschieden sind,
- das Symbol L² für einen anionischen Liganden steht, der von L¹ verschieden ist, und im Fall von r2 ≥ 2 die Symbole L² gleich oder verschieden sind und
- das Symbol Y für einen neutralen Liganden steht und im Fall von x ≥ 2 die Symbole Y gleich oder verschieden sind,
[Fe(L³)ᵣ₃(L⁴)ᵣ₄(Y')_{x'}] **(2')**
wobei:
- r3 ≥ 1; r4 > 0 und x' ≥ 0;
- das Symbol L³ für ein β-Ketoesterato-Anion oder das Enolat-Anion einer β-Ketoesterverbindung steht und im Fall von r3 ≥ 2 die Symbole L³ gleich oder verschieden sind,
- das Symbol L⁴ für einen anionischen Liganden steht, der von L³ verschieden ist, und im Fall von r4 ≥ 2 die Symbole L⁴ gleich oder verschieden sind und
- das Symbol Y' für einen neutralen Liganden steht und im Fall von x' ≥ 2 die Symbole Y' gleich oder verschieden sind, und
[Fe(L⁵)ᵣ₅(L⁴)ᵣ₄(Y')_{x'}] **(3')**
wobei:
- r5 ≥ 1; r4 > 0 und x' ≥ 0;
- das Symbol L⁵ für ein β-Diketonato-Anion aus der Gruppe bestehend aus 3,5-Heptandionato, 2,6-Dimethyl-3,5-heptandionato und 2,2,6,6-Tetramethyl-3,5-heptandionato steht im Fall von r5 ≥ 2 die Symbole L⁵ gleich oder verschieden sind,
- das Symbol L⁴ für einen anionischen Liganden steht, der von L⁵ verschieden ist, und im Fall von r4 ≥ 2 die Symbole L⁴ gleich oder verschieden sind,
- das Symbol Y' für einen neutralen Liganden steht und im Fall von x' ≥ 2 die Symbole Y' gleich oder verschieden sind und
- L² und L⁴ anionische Liganden sind, die aus der Gruppe bestehend aus den folgenden Anionen ausgewählt sind: Fluoro (F⁻), Chloro (Cl⁻), Triiodo(1⁻)(I₃)⁻, Difluorochlorato(1⁻)[ClF₂]⁻, Hezafluoroiodato(1⁻)[IF₆]⁻, Oxochlorato(1⁻) (ClO)⁻, Dioxochlorato(1⁻)(ClO₂)⁻, Trioxochlorato(1⁻)(ClO₃)⁻, Tetraoxochlorato(1⁻) (ClO₄)⁻, Hydroxo (OH)⁻, Mercapto (SH)⁻, Selanido (SeH)⁻, Hyperoxo(O₂)⁻, Ozonido (O₃)⁻, Hydroxo (OH⁻), Hydrodisulfido(HS₂)⁻, Methoxo(CH₃O)⁻, Ethoxo(C₂H₅O)⁻, Propoxido(C₃H₇O)⁻, Methylthio (CH₃S)⁻, Ethanthiolato(C₂H₅S)⁻, 2-Chlorethanolato(C₂H₄ClO)⁻, Phenoxido(C₆H₅O)⁻, Phenylthio(C₆H₅S)⁻, 4-Nitrophenolato [C₆H₄(NO₂)O]⁻, Formiato(HCO₂)⁻, Acetato (CH₃CO₂)⁻, Propionato(CH₃CH₂CO₂)⁻, Nitrido(N₃)⁻, Cyano (CN)⁻, Cyanato (NCO)⁻, Thiocyanato (NCS)⁻, Selenocyanato (NCSe)⁻, Amido(NH₂)⁻, Phosphino (PH₂)⁻, Chlorazanido(ClHN)⁻, Dichlorazanido (Cl₂N)⁻, [Methanaminato(1⁻)](CH₃NH)⁻, Diazenido (HN=N)⁻, Diazanido(H₂N-NH)⁻, Diphosphenido (HP=P)⁻, Phosphonito (H₂PO)⁻, Phosphinato (H₂PO₂)⁻, Carboxylato, Enolato, Amiden, Alkylato und Arylato.

4. Einkomponentige Organopolysiloxanzusammensetzung nach einem der vorhergehenden Ansprüche, **dadurch gekennzeichnet, dass** es sich bei dem Polykondensationskatalysator um einen Metallkomplex oder ein Metallsalz **A** handelt, das aus der Gruppe bestehend aus den folgenden Komplexen ausgewählt ist:
**(15):** [Mo(O₂)(*t-Bu-acac*)₂] mit *(t-Bu-acac)* = das 2,2,6,6-Tetramethyl-3,5-heptandionato-Anion oder das Enolat-Anion von 2,2,6,6-Tetramethyl-3,5-heptandion,
**(16) :** [Mo(O₂)(*Cy-acac*)₂] mit *Cy-acac* = das 2-Acetylcyclohexanonato-Anion oder das Enolat-Anion von 2-Acetylcyclohexanon,
(**17)** : [Mo(O₂)(*acac*)₂] mit *acac* = das 2,4-Pentandionato-Anion oder das Enolat-Anion von 2,4-Pentandion,
**(18):** [Mo(O₂)(*Cp-acac*)₂] mit *Cp-acac* = das 2-Acetylcyclopentanonato-Anion oder das Enolat-Anion von 2-Acetylcyclopentanon,
**(25):** [Fe(*EAA*)₂(2-Ethylhexanoato)] mit *EAA* = das Ethylacetoacetato-Anion oder das Enolat-Anion von Ethylacetoacetat,
**(26):** [Fe(*EAA*)(2-Ethylhexanoato)₂] mit *EAA* = das Ethylacetoacetato-Anion oder das Enolat-Anion von Ethylacetoacetat,
**(32):** [Fe(Isopropylacetoacetato)₂(2,2-dimethylbutyrato)],
**(33):** [Fe(Isopropylacetoacetato)(2,2-dimethylbutyrato)₂], und

5. Einkomponentige Organopolysiloxanzusammensetzung nach einem der Ansprüche 1 bis 3, **dadurch gekennzeichnet, dass** es sich bei dem β-Dicarbonylato-Liganden L¹ um ein von einem β-Diketon abgeleitetes β-Diketonato-Anion oder ein von einem β-Ketoester abgeleitetes β-Ketoester-Anion der folgenden Formel handelt:
R¹COCHR²COR³ **(34)**
wobei:
- R¹ für einen substituierten oder unsubstituierten, linearen oder verzweigten C₁-C₃₀-Kohlenwasserstoffrest oder einen substituierten oder unsubstituierten Aromaten steht,
- R² für Wasserstoff oder einen Kohlenwasserstoffrest, im Allgemeinen Alkylrest, der vorteilhafterweise höchstens 4 Kohlenstoffatome aufweist, steht;
- R³ für einen substituierten oder unsubstituierten, linearen, cyclischen oder verzweigten C₁-C₃₀-Kohlenwasserstoffrest, einen substituierten oder unsubstituierten Aromaten oder einen Rest -OR⁴ steht, wobei R⁴ für einen substituierten oder unsubstituierten, linearen, cyclischen oder verzweigten C₁-C₃₀-Kohlenwasserstoffrest steht, wobei
- R¹ und R² zu einem Ring verbunden sein können und
- R² und R⁴ zu einem Ring verbunden sein können und mit der zusätzlichen Maßgabe, dass dann, wenn das Symbol M für Kupfer steht, das Symbol L¹ nicht für Acetylacetonat (acac) steht.

6. Einkomponentige Organopolysiloxanzusammensetzung nach Anspruch 6, **dadurch gekennzeichnet, dass** das β-Diketon der Formel **(34)** aus der Gruppe bestehend aus den folgenden β-Diketonen ausgewählt ist: 2,4-Pentandion (*acac*); 2,4-Hexandion; 2,4-Heptandion; 3,5-Heptandion; 3-Ethyl-2,4-pentandion; 5-Methyl-2,4-hexandion; 2,4-Octandion; 3,5-Octandion; 5,5-Dimethyl-2,4-hexandion; 6-Methyl-2,4-heptandion; 2,2-Dimethyl-3,5-nonandion; 2,6-Dimethyl-3,5-heptandion; 2-Acetylcyclohexanon (*Cy-acac*)*;* 2,2,6,6-Tetramethyl-3,5-heptandion (*t-Bu-acac*)*;* 1,1,1,5,5,5-Hexafluor-2,4-pentandion (*F-acac*)*;* Benzoylaceton; Dibenzoylmethan; 3-Methyl-2,4-pentadion; 3-Acetyl-2-pentanon; 3-Acetyl-2-hexanon; 3-Acetyl-2-heptanon; 3-Acetyl-5-methyl-2-hexanon; Stearoylbenzoylmethan; Octanoylbenzoylmethan; 4-*t*-Butyl-4'-methoxydibenzoylmethan; 4,4'-Dimethoxydibenzoylmethan und 4,4'-Di-*tert-*butyldibenzoylmethan.

7. Einkomponentige Organopolysiloxanzusammensetzung nach einem der Ansprüche 1 bis 3, **dadurch gekennzeichnet, dass** es sich bei dem β-Dicarbonylato-Liganden L¹ um ein β-Ketoesterato-Anion handelt, das aus den Anionen besteht, die sich von den folgenden Verbindungen ableiten: den Methyl-, Ethyl-, n-Propyl-, Isopropyl-, n-Butyl-, *sec-*Butyl-, Isobutyl-, tert-Butyl-, Isopentyl-, n-Hexyl-, n-Octyl-, 1-Methylheptyl-, n-Nonyl-, n-Decyl und n-Dodecylestern von Acetylessigsäure.

8. Einkomponentige Organopolysiloxanzusammensetzung nach einem der Ansprüche 1 bis 3, **dadurch gekennzeichnet, dass** es sich bei L² und L⁴ um anionische Liganden handelt, die aus der Gruppe der folgenden Anionen ausgewählt sind: Acetat, Oxalat, Propionat, Butyrat, Isobutyrat, Trimethylacetat, Diethylacetat, Benzoat, 2-Ethylhexanoat, Stearat, Methoxid, Ethoxid, Isopropoxid, tert-Butoxid, tert-Pentoxid, 8-Hydroxychinolinat, Naphthenat, Tropolonat und dem Oxo-Anion O²⁻.

9. Elastomer, erhalten durch Vernetzung und Härtung der einkomponentigen Zusammensetzung gemäß einem der Ansprüche 1 bis 8.

10. Verwendung der Verbindungen der folgenden Formeln als Katalysator für die Polykondensationsreaktion von Organopolysiloxanen:
**(15):** [Mo(O₂) (*t-Bu-acac*)₂] mit (*t-Bu-acac*) = das 2,2,6,6-Tetramethyl-3,5-heptandionato-Anion oder das Enolat-Anion von 2,2,6,6-Tetramethyl-3,5-heptandion;
**(16):** [Mo(O₂)(*Cy-acac*)₂] mit *Cy-acac* = das 2-Acetylcyclohexanonato-Anion oder das Enolat-Anion von 2-Acetylcyclohexanon,
**(17):** [Mo(O₂)(*acac*)₂] mit *acac* = das 2,4-Pentandionato-Anion oder das Enolat-Anion von 2,4-Pentandion,
**(18):** [Mo(O₂)(*Cp-acac*)₂] mit *Cp-acac* = das 2-Acetylcyclopentanonato-Anion oder das Enolat-Anion von 2-Acetylcyclopentanon,
**(25):** [Fe(*EAA*)₂(2-Ethylhexanoato)] mit *EAA* = das Ethylacetoacetato-Anion oder das Enolat-Anion von Ethylacetoacetat,
**(26):** [Fe(*EAA*)(2-Ethylhexanoato)₂] mit *EAA* = das Ethylacetoacetato-Anion oder das Enolat-Anion von Ethylacetoacetat,
**(32):** [Fe(Isopropylacetoacetato)₂(2,2-dimethyl-butyrato)],
**(33):** [Fe(Isopropylacetoacetato)(2,2-dimethyl-butyrato)₂].

11. Verbindungen der folgenden Formeln:
**(16):** [Mo(O₂)(*Cy-acac*)₂] mit *Cy-acac* = das 2-Acetylcyclohexanonato-Anion oder das Enolat-Anion von 2-Acetylcyclohexanon,
**(18):** [Mo(O₂)(*Cp-acac*)₂] mit *Cp-acac* = das 2-Acetylcyclopentanonato-Anion oder das Enolat-Anion von 2-Acetylcyclopentanon,
**(25):** [Fe(*EAA*)₂(2-Ethylhexanoato)] mit *EAA* = das Ethylacetoacetato-Anion oder das Enolat-Anion von Ethylacetoacetat,
**(26):** [Fe(*EAA*)(2-Ethylhexanoato)₂] mit *EAA* = das Ethylacetoacetato-Anion oder das Enolat-Anion von Ethylacetoacetat,
**(32):** [Fe(Isopropylacetoacetato)₂(2,2-dimethyl-butyrato)] und
**(33):** [Fe(Isopropylacetoacetato)(2,2-dimethyl-butyrato)₂].

## Claims

1. Single-component polyorganosiloxane composition that is stable during storage in the absence of moisture and that crosslinks, in the presence of water, into an elastomer, **characterized in that** it comprises:
- at least one crosslinkable linear polyorganopolysiloxane that has functionalized ends of alkoxy, oxime, acyl and/or enoxy type, preferably alkoxy type;
- a filler; and
- a catalyst of the polycondensation reaction which is a metal complex or salt **A** of formula **(1), (2)** or **(3)** below:
[M(L¹)ᵣ₁(L²)ᵣ₂(Y)ₓ] **(1)**
in which:
- r1 ≥ 1, r2 ≥ 0 and x ≥ 0;
- the symbol M represents a metal selected from the group constituted by: copper, silver, scandium, cerium, ytterbium, molybdenum, germanium and manganese;
- the symbol L¹ represents a ligand which is a β-dicarbonylato anion or the enolate anion of a β-dicarbonyl-containing compound, or an acetylacetato anion derived from a β-keto ester and when r1 ≥2, the symbols L¹ are identical or different, with the supplementary condition that when the symbol M represents copper then the symbol L¹ is not acetylacetonate (acac);
- the symbol L² represents an anionic ligand which is different from L¹ and when r2 ≥ 2, the symbols L² are identical or different; and
- the symbol Y represents a neutral ligand and when x ≥ 2, the symbols Y are identical or different;
[Fe(L³)ᵣ₃(L⁴)ᵣ₄(Y')_{x'}] **(2)**
in which:
- r3 ≥ 1; r4 ≥ 0 and x' ≥ 0;
- the symbol L³ represents a ligand which is a β-ketoesterato anion or the enolate anion of a β-keto ester compound and when r3 ≥ 2, the symbols L³ are identical or different;
- the symbol L⁴ represents an anionic ligand which is different from L³ and when r4 ≥ 2, the symbols L⁴ are identical or different; and
- the symbol Y' represents a neutral ligand and when x' ≥ 2, the symbols Y' are identical or different; and
[Fe(L⁵)ᵣ₅(L⁴)ᵣ₄(Y')_{x'}] **(3)**
in which:
- r5 ≥ 1; r4 ≥ 0 and x' ≥ 0;
- the symbol L⁵ represents a ligand which is a β-diketonato anion chosen from the group constituted by: 3,5-heptanedionato, 2,6-dimethyl-3,5-heptanedionato and 2,2,6,6-tetramethyl-3,5-heptanedionato and when r5 ≥ 2, the symbols L⁵ are identical or different;
- the symbol L⁴ represents an anionic ligand which is different from L⁵ and when r4 ≥ 2, the symbols L⁴ are identical or different;
- the symbol Y' represents a neutral ligand and when x' ≥ 2, the symbols Y' are identical or different and
- L² and L⁴ are anionic ligands selected from the group constituted by the following anions: fluoro (F⁻ ), chloro (Cl⁻), triiodo(1⁻) (I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tetraoxochlorato(1⁻) (CIO₄)⁻, hydroxo (OH)⁻, mercapto (SH)⁻, selanido (SeH)⁻, hyperoxo (O₂)⁻, ozonido (O₃)⁻, hydroxo (OH⁻), hydrodisulfido (HS₂)⁻, methoxo (CH₃O)⁻, ethoxo (C₂H₅O)⁻, propoxido(C₃H₇O)⁻, methylthio(CH₃S)⁻, ethanethiolato (C₂H₅S)⁻, 2-chloroethanolato (C₂H₄CIO)⁻, phenoxido (C₆H₅O)⁻, phenylthio (C₆H₅S)⁻, 4-nitrophenolato [C₆H₄(NO₂)O]⁻, formato (HCO₂)⁻, acetato (CH₃CO₂)⁻, propionato (CH₃CH₂CO2)⁻, nitrido(N₃)⁻, cyano (CN)⁻, cyanato (NCO)⁻, thiocyanato (NCS)⁻, selenocyanato (NCSe)⁻, amido (NH₂)⁻, phosphino (PH₂)⁻, chloroazanido (ClHN)⁻, dichloroazanido (Cl₂N)⁻, [methanaminato(1⁻)] (CH₃NH)⁻, diazenido (HN=N)⁻, diazanido (H₂N-NH)⁻, diphosphenido (HP=P)⁻, phosphonito (H₂PO)⁻, phosphinato (H₂PO₂)⁻, carboxylato, enolato, amides, alkylato and arylato.

2. Single-component organopolysiloxane composition according to Claim 1, **characterized in that** the polycondensation catalyst is a metal complex **A** of formula **(4), (5)** or **(6)** below:
[M(L¹)ₗ₁(L²)ₗ₂] **(4)**
in which:
- l₁ ≥ 1and l₂ ≥ 0;
- the symbol M represents a metal selected from the group constituted by: copper, silver, scandium, cerium, ytterbium, molybdenum, germanium and manganese;
- the symbol L¹ represents a ligand which is a β-dicarbonylato anion or the enolate anion of a β-dicarbonyl-containing compound, or an acetylacetato anion derived from a β-keto ester and when l₁ ≥ 2, the symbols L¹ are identical or different, with the supplementary condition that when the symbol M represents copper then the symbol L¹ is not acetylacetonate (acac);
- the symbol L² represents an anionic ligand which is different from L¹ and when l₂ ≥ 2, the symbols L² are identical or different;
[Fe(L³)ₗ₃(L⁴)ₗ₄] **(5)**
in which:
- l₃ ≥1, l₄ ≥ 0 and l₃ + l₄ = 3;
- the symbol L³ represents a ligand which is a β-ketoesterato anion or the enolate anion of a β-keto ester compound and when l₃ ≥ 2, the symbols L³ are identical or different;
- the symbol L⁴ represents an anionic ligand which is different from L³ and when l₄ ≥ 2, the symbols L⁴ are identical or different; and
[Fe(L⁵)ₗ₅(L⁴)ₗ₄] **(6)**
in which:
- l₅ ≥ 1; l₄ ≥ 0 and l₄ + l₅ = 3;
- the symbol L⁵ represents a ligand which is a β-diketonato anion chosen from the group constituted by: 3,5-heptanedionato, 2,6-dimethyl-3,5-heptanedionato and 2,2,6,6-tetramethyl-3,5-heptanedionato and when l₅ ≥ 2, the symbols L⁵ are identical or different;
- the symbol L⁴ represents an anionic ligand which is different from L⁵ and when l₄ ≥ 2, the symbols L⁴ are identical or different and
- L² and L⁴ are anionic ligands selected from the group constituted by the following anions: fluoro (F⁻), chloro (Cl⁻), triiodo(1⁻) (I₃)⁻, difluorochlorato(1⁻)[ClF₂]⁻, hexafluoroiodato(1⁻) [IF₆]⁻, oxochlorato(1⁻) (CIO)⁻, dioxochlorato(1⁻) (CIO₂)⁻, trioxochlorato (1⁻) (CIO₃)⁻, tetraoxochlorato(1⁻)(CIO₄)⁻, hydroxo (OH)⁻, mercapto (SH)⁻, selanido (SeH)⁻, hyperoxo (O₂)⁻, ozonido (O₃)⁻, hydroxo (OH⁻), hydrodisulfido (HS₂)⁻, methoxo (CH₃O)⁻, ethoxo (C₂H₅O)⁻, propoxido(C₃H₇O)⁻, methylthio (CH₃S)⁻, ethanethiolato (C₂H₅S)⁻, 2-chloroethanolato (C₂H₄CIO)⁻, phenoxido (C₆H₅O)⁻, phenylthio (C₆H₅S)⁻, 4-nitrophenolato [C₆H₄(NO₂)O]⁻, formato (HCO2)⁻, acetato (CH₃CO2)⁻, propionato (CH₃CH₂CO₂)⁻ , nitrido (N₃)⁻, cyano (CN)⁻, cyanato (NCO)⁻, thiocyanato (NCS)⁻, selenocyanato (NCSe)⁻, amido (NH₂)⁻, phosphino (PH₂)⁻, chloroazanido (ClHN)⁻, dichloroazanido (Cl₂N)⁻, [methanaminato(1⁻)] (CH₃NH)⁻, diazenido (HN=N)⁻, diazanido (H₂N-NH)⁻, diphosphenido (HP=P)⁻, phosphonito (H₂PO)⁻, phosphinato (H₂PO₂)⁻, carboxylato, enolato, amides, alkylato and arylato.

3. Single-component organopolysiloxane composition according to Claim 1, **characterized in that** the polycondensation catalyst is a metal complex or salt **A** of formula **(1'), (2')** or **(3')** below:
[M(L¹)ᵣ₁(L²)ᵣ₂(Y)ₓ] **(1')**
in which:
- r1 ≥ 1, r2 ≥ 0 and x ≥ 0;
- the symbol M represents a metal selected from the group constituted by: cerium, molybdenum and manganese;
- the symbol L¹ represents a ligand which is a β-dicarbonylato anion or the enolate anion of a β-dicarbonyl-containing compound, or an acetylacetato anion derived from a β-keto ester and when r1 ≥ 2, the symbols L¹ are identical or different;
- the symbol L² represents an anionic ligand which is different from L¹ and when r2 ≥ 2, the symbols L² are identical or different; and
- the symbol Y represents a neutral ligand and when x ≥ 2, the symbols Y are identical or different;
[Fe(L³)ᵣ₃(L⁴)ᵣ₄(Y')_{x'}] **(2')**
in which:
- r3 ≥ 1; r4 ≥ 0 and x' ≥ 0;
- the symbol L³ represents a ligand which is a β-ketoesterato anion or the enolate anion of a β-ketö ester compound and when r3 ≥ 2, the symbols L³ are identical or different;
- the symbol L⁴ represents an anionic ligand which is different from L³ and when r4 ≥ 2, the symbols L⁴ are identical or different; and
- the symbol Y' represents a neutral ligand and when x' ≥ 2, the symbols Y' are identical or different; and
[Fe(L⁵)ᵣ₅(L⁴)ᵣ₄(Y')_{x'}] **(3')**
in which:
- r5 ≥1; r4 ≥ 0 and x' ≥ 0;
- the symbol L⁵ represents a ligand which is a β-diketonato anion chosen from the group constituted by: 3,5-heptanedionato, 2,6-dimethyl-3,5-heptanedionato and 2,2,6,6-tetramethyl-3,5-heptanedionato and when r5 ≥ 2, the symbols L⁵ are identical or different;
- the symbol L⁴ represents an anionic ligand which is different from L⁵ and when r4 ≥ 2, the symbols L⁴ are identical or different;
- the symbol Y' represents a neutral ligand and when x' ≥ 2, the symbols Y' are identical or different; and
- L² and L⁴ are anionic ligands selected from the group constituted by the following anions: fluoro (F⁻ ), chloro (Cl⁻), triiodo(1⁻)(I₃)⁻, difluorochlorato(1⁻) [ClF₂]⁻, hexafluoroiodato(1⁻) [IF₆]⁻, oxochlorato(1⁻) (CIO)⁻, dioxochlorato(1⁻) (CIO₂)⁻, trioxochlorato(1⁻) (CIO₃)⁻, tetraoxochlorato(1⁻) (CIO₄)⁻, hydroxo (OH)⁻, mercapto (SH)⁻, selanido (SeH)⁻, hyperoxo (O₂)⁻, ozonido (O₃)⁻, hydroxo (OH⁻), hydrodisulfido (HS₂)⁻, methoxo (CH₃O)⁻, ethoxo (C₂H₅O)⁻, propoxido(C₃H₇O)⁻, methylthio (CH₃S)⁻, ethanethiolato (C₂H₅S) 2-chloroethanolato (C₂H₄CIO)⁻, phenoxido (C₆H₅O)⁻, phenylthio (C₆H₅S)⁻, 4-nitrophenolato [C₆H₄(NO₂)O]⁻, formato (HCO₂)⁻, acetato (CH₃CO₂)⁻, propionato (CH₃CH₂CO₂)⁻, nitrido(N₃)⁻, cyano (CN)⁻, cyanato (NCO)⁻, thiocyanato (NCS)⁻, selenocyanato (NCSe)⁻, amido (NH₂)⁻, phosphino (PH₂)⁻, chloroazanido (ClHN)⁻, dichloroazanido (Cl₂N)⁻, [methanaminato(1⁻)] (CH₃NH)⁻, diazenido (HN=N)⁻, diazanido (H₂N-NH)⁻, diphosphenido (HP=P)⁻, phosphonito (H₂PO)⁻, phosphinato (H₂PO₂)⁻, carboxylato, enolato, amides, alkylato and arylato.

4. Single-component organopolysiloxane composition according to any one of the preceding claims, **characterized in that** the polycondensation catalyst is a metal complex or salt **A** chosen from the group constituted by the following complexes:
**(15):** [MO(O₂)(*t-Bu-acac*)₂] where *(t-Bu-acac)* = the 2,2,6,6-tetramethyl-3,5-heptanedionato anion or the enolate anion of 2,2,6,6-tetramethyl-3,5-heptanedione;
**(16):** [Mo(O₂)(*Cy-acac*)₂] where *Cy-acac* = the 2-acetylcyclohexanonato anion or the enolate anion of 2-acetylcyclohexanone;
(17): [MO(O₂)(acac)₂] where *acac* = the 2,4-pentanedionato anion or the enolate anion of 2,4-pentanedione;
**(18):** [Mo(O₂)(*Cp-acac*)₂] where *Cp-acac* = the 2-acetylcyclopentanonato anion or the enolate anion of 2-acetylcyclopentanone;
**(25):** [Fe*(EAA)*₂(2-ethylhexanoato)] where *EAA* = the ethyl acetoacetato anion or the enolate anion of ethyl acetoacetate;
**(26):** [Fe(*EAA*)(2-ethylhexanoato)₂] where *EAA* = the ethyl acetoacetato anion or the enolate anion of ethyl acetoacetate;
**(32):** [Fe(isopropyl acetoacetato)₂(2,2-dimethylbutyrato)];
**(33):** [Fe(isopropyl acetoacetato)(2,2-dimethylbutyrato)₂]; and

5. Single-component organopolysiloxane composition according to any one of Claims 1 to 3, **characterized in that** the β-dicarbonylato ligand L¹ is a β-diketonato anion derived from a β-diketone or a β-ketoesterato anion derived from a β-keto ester of the following formula:
R¹COCHR²COR³ **(34)**
in which:
- R¹ represents a substituted or unsubstituted, linear or branched C₁-C₃₀ hydrocarbon-based radical or a substituted or unsubstituted aromatic,
- R² is a hydrogen or a hydrocarbon-based, in general alkyl, radical advantageously having at most 4 carbon atoms;
- R³ represents a substituted or unsubstituted, linear, cyclic or branched C₁-C₃₀ hydrocarbon-based radical, a substituted or unsubstituted aromatic, or an -OR⁴ radical where R⁴ represents a substituted or unsubstituted, linear, cyclic or branched C₁-C₃₀ hydrocarbon-based radical, where
- R¹ and R² may be joined together to form a ring; and
- R² and R⁴ may be joined together to form a ring; and with the supplementary condition that when the symbol M represents copper then the symbol L¹ is not acetylacetonate (acac).

6. Single-component organopolysiloxane composition according to Claim 6, **characterized in that** the β-diketone of formula **(34)** is chosen from the group constituted by the following β-diketones: 2,4-pentanedione (*acac*); 2,4-hexanedione; 2,4-heptanedione; 3,5-heptanedione; 3-ethyl-2,4-pentanedione; 5-methyl-2,4-hexanedione; 2,4-octanedione; 3,5-octanedione; 5,5-dimethyl-2,4-hexanedione; 6-methyl-2,4-heptanedione; 2,2-dimethyl-3,5-nonanedione; 2,6-dimethyl-3,5-heptanedione; 2-acetylcyclohexanone (*Cy-acac*); 2,2,6,6-tetramethyl-3,5-heptanedione (*t-Bu-acac*)*;* 1,1,1,5,5,5-hexafluoro-2,4-pentanedione (*F-acac*); benzoylacetone; dibenzoylmethane; 3-methyl-2,4-pentadione; 3-acetyl-2-pentanone; 3-acetyl-2-hexanone; 3-acetyl-2-heptanone; 3-acetyl-5-methyl-2-hexanone; stearoyl benzoyl methane; octanoyl benzoyl methane; 4-*t*-butyl-4'-methoxydibenzoylmethane; 4,4'-dimethoxydibenzoylmethane and 4,4'-di-*tert*-butyldibenzoylmethane.

7. Single-component organopolysiloxane composition according to any one of Claims 1 to 3, **characterized in that** the β-dicarbonylato ligand L¹ is a β-ketoesterato anion chosen from the group constituted by the anions derived from the following compounds: methyl, ethyl, n-propyl, isopropyl, n-butyl, *sec*-butyl, isobutyl, *tert-*butyl, isopentyl, n-hexyl, n-octyl, 1-methylheptyl, n-nonyl, n-decyl and n-dodecyl esters of acetylacetic acid.

8. Single-component organopolysiloxane composition according to any one of Claims 1 to 3, **characterized in that** L² and L⁴ are anionic ligands selected from the group constituted by the following anions: acetate, oxalate, propionate, butyrate, isobutyrate, trimethylacetate, diethylacetate, benzoate, 2-ethylhexanoate, stearate, methoxide, ethoxide, isopropoxide, *tert*-butoxide, *tert*-pentoxide, 8-hydroxyquinolinate, naphthenate, tropolonate and the oxido O²⁻ anion.

9. Elastomer that is obtained by crosslinking and curing of the single-component composition as defined according to any one of Claims 1 to 8.

10. Use, as a catalyst for the polycondensation reaction of organopolysiloxanes, of the compounds of the following formulae:
**(15):** [Mo(O₂)(*t-Bu-acac*)₂] where *(t-Bu-acac)* = the 2,2,6,6-tetramethyl-3,5-heptanedionato anion or the enolate anion of 2,2,6,6-tetramethyl-3,5-heptanedione;
**(16):** [Mo(O₂)(*Cy-acac*)₂] where *Cy-acac* = the 2-acetylcyclohexanonato anion or the enolate anion of 2-acetylcyclohexanone;
**(17):** [Mo(O₂)(*acac*)₂] where *acac* = the 2,4-pentanedionato anion or the enolate anion of 2,4-pentanedione;
**(18):** [MO(O₂)(*Cp-acac*)₂] where *Cp-acac* = the 2-acetylcyclopentanonato anion or the enolate anion of 2-acetylcyclopentanone;
**(25):** [Fe(*EAA*)₂(2-ethylhexanoato)] where *EAA* = the ethyl acetoacetato anion or the enolate anion of ethyl acetoacetate;
**(26):** [Fe(*EAA*)(2-ethylhexanoato)₂] where *EAA* = the ethyl acetoacetato anion or the enolate anion of ethyl acetoacetate;
**(32):** [Fe(isopropyl acetoacetato)₂(2,2-dimethylbutyrato)];
**(33):** [Fe(isopropyl acetoacetato)(2,2-dimethylbutyrato)₂].

11. Compounds of the following formulae:
**(16):** [MO(O₂)(*Cy-acac*)₂] where *Cy-acac* = the 2-acetylcyclohexanonato anion or the enolate anion of 2-acetylcyclohexanone;
**(18):** [Mo(O₂)(*Cp-acac*)₂] where *Cp-acac* = the 2-acetylcyclopentanonato anion or the enolate anion of 2-acetylcyclopentanone;
**(25):** [Fe(*EAA*)₂(2-ethylhexanoato)] where *EAA* = the ethyl acetoacetato anion or the enolate anion of ethyl acetoacetate;
**(26):** [Fe(EAA)(2-ethylhexanoato)_{2]} where *EAA* = the ethyl acetoacetato anion or the enolate anion of ethyl acetoacetate;
**(32):** [Fe(isopropyl acetoacetato)₂(2,2-dimethylbutyrato)]; and
**(33):** [Fe(isopropyl acetoacetato)(2,2-dimethylbutyrato)₂].
